# EUROPEAN PATENT APPLICATION

(11) **EP 4 672 728 A1**
(43) Date of publication of application: **31.12.2025**
(21) Application number: 24775062.3
(22) Date of filing: 30.01.2024
(51) Int. Cl.: H04M 1/72409, G06F 3/048, H04M 1/72484, H04W 4/80

(54) **METHOD FOR PERFORMING OPERATION ACCORDING TO MOUNTING OF ACCESSORY, ELECTRONIC DEVICE THEREFOR, AND STORAGE MEDIUM**

(30) Priority: 20.03.2023 KR 20230035859; 17.04.2023 KR 20230050292
(71) Applicant: Samsung Electronics Co., Ltd., Suwon-si, Gyeonggi-do 16677 (KR)
(72) Inventor: LEE, Hyungmin, Suwon-si Gyeonggi-do 16677 (KR); KOH, Sanghyuk, Suwon-si Gyeonggi-do 16677 (KR); KIM, Joseph, Suwon-si Gyeonggi-do 16677 (KR); KIM, Juyeoung, Suwon-si Gyeonggi-do 16677 (KR); KIM, Jun, Suwon-si Gyeonggi-do 16677 (KR); KIM, Hyeryoung, Suwon-si Gyeonggi-do 16677 (KR)
(74) Representative: HGF
(86) International application number: PCT/KR2024/001397
(87) International publication number: WO 2024/196014

(57) **Abstract**

According to an embodiment, an electronic device (101) may comprise: a display (160, 660); a short-range communication module (190, 690); at least one sensor (176. 676); at least one processor (120, 620); and a memory (130, 630) which stores instructions. According to an embodiment, the instructions may be configured to, when executed by the at least one processor, cause the electronic device to acquire identification information of an accessory (102) through the short-range communication module. According to an embodiment, the instructions may be configured to cause the electronic device to identify the direction in which the accessory is mounted to the electronic device, on the basis of a signal detected by the at least one sensor according to the mounting of the accessory to the electronic device. According to an embodiment, the instructions may be configured to cause the electronic device to output, through the display, content corresponding to the identification information and the mounting direction.

## Description

### [Technical Field]

Embodiments disclosed herein relate to a method for performing an operation according to mounting of an accessory, an electronic device therefor, and a storage media.

### [Background Art]

With the gradual expansion of various services and additional functions provided by an electronic device, a protective case (or a protective cover) designed to fit the exterior of such an electronic device are being provided not only to safely protect the electronic device from external impacts or the intrusion of foreign substances, but also to serve as an accessory that expresses the user's individuality. Such a protective case may be manufactured in a form that covers part or all of the electronic device.

Accessories, like protective cases, can serve not only to protect electronic devices but also to enhance the aesthetic appearance of the electronic devices. However, the accessories can also be coupled, attached, or mounted to the electronic devices in a way that allows interaction with the electronic devices, thereby enabling users to utilize various additional functions. In recent years, in line with consumer trends that prioritize design, accessory development has come to place importance not only on the external design of the accessories but also ease of the use of the electronic devices.

The information described above may be provided as related art to aid in understanding the disclosure. No claim or determination is made as to the applicability of the above description as prior art related to the disclosure.

### [Detailed Description of the Invention]

### [Technical Solution]

According to an embodiment, an electronic device 101 may include a display 160 or 660, a short-range communication module 190 or 690, at least one sensor 176 or 676, at least one processor 120 or 620, and memory 130 or 630 configured to store instructions. According to an embodiment, the instructions may be configured to, when executed by the at least one processor, cause the electronic device to obtain identification information of an accessory 102 via the short-range communication module. According to an embodiment, the instructions may be configured to cause the electronic device to identify an orientation in which an accessory is mounted to the electronic device, based on a signal detected by the at least one sensor as the accessory is mounted to the electronic device. According to an embodiment, the instructions may be configured to cause the electronic device to output content corresponding to the identification information and the mounted orientation.

According to an embodiment, a method for performing an operation according to accessory mounting in an electronic device 101 may include obtaining identification information of an accessory 102 through a short-range communication module 190 or 690 of the electronic device. According to an embodiment, the method may include identifying an orientation in which the accessory is mounted to the electronic device, based on a signal detected by at least one sensor 176 or 676 of the electronic device as the accessory is mounted to the electronic device. According to an embodiment, the method may include outputting content corresponding to the identification information and the mounted orientation.

According to an embodiment, in a storage medium storing at least one instruction readable by a computer, the at least one instruction, when executed by at least one processor 120 or 620 of an electronic device 101, may cause the electronic device to perform at least one operation, wherein the at least one operation includes obtaining identification information of an accessory 102 through a short-range communication module 190 or 690 of the electronic device. According to an embodiment, the at least one operation may include identifying an orientation in which the accessory is mounted to the electronic device, based on a signal detected by at least one sensor 176 or 676 of the electronic device as the accessory is mounted to the electronic device. According to an embodiment, the at least one operation may include outputting content corresponding to the identification information and the mounted orientation.

### [Brief Description of Drawings]

FIG. 1 is a block diagram of an electronic device in a network environment according to an embodiment.
FIG. 2A illustrates the front and rear surfaces of a first-type electronic device according to an embodiment.
FIG. 2B illustrates a first-type electronic device displaying content corresponding to mounting of an accessory according to an embodiment.
FIG. 2C illustrates a magnetic body disposed in a card-type accessory according to an embodiment.
FIG. 2D illustrates a second-type electronic device displaying content corresponding to mounting of an accessory according to an embodiment.
FIG. 3 illustrates various types of accessories according to an embodiment.
FIG. 4A illustrates a card-type accessory and a first-type protective case according to an embodiment.
FIG. 4B illustrate a card-type accessory and a second-type protective case according to an embodiment.
FIG. 5A illustrates a method of mounting an accessory according to an embodiment.
FIG. 5B illustrates the front and rear surfaces of an electronic device when an accessory according to an embodiment is mounted.
FIG. 6 is an internal block diagram of an electronic device for performing an operation according to accessory mounting according to an embodiment.
FIG. 7 is an operation flowchart for performing operations according to the accessory mounting in an electronic device according to an embodiment.
FIG. 8A is a flowchart of operations for providing content corresponding to a mounted orientation of an accessory according to an embodiment.
FIG. 8B is a flowchart of operations following FIG. 8A.
FIG. 9A illustrates a first arrangement of elements for detecting the mounted orientation between an electronic device according to an embodiment and a double-sided accessory.
FIG. 9B illustrates a screen displaying different types of content according to first and second mounted orientations of an accessory having a first arrangement according to an embodiment.
FIG. 9C illustrates a screen indicating incorrect mounting of an accessory having a first arrangement according to an embodiment.
FIG. 10A illustrates a second arrangement of elements for detecting the mounted orientation between an electronic device and a double-sided accessory according to an embodiment.
FIG. 10B illustrates a screen displaying different types of content according to first and second mounted orientations of an accessory having a second arrangement according to an embodiment.
FIG. 10C illustrates a screen indicating incorrect mounting of an accessory having a second arrangement according to an embodiment.
FIG. 11A illustrates a third arrangement of elements for detecting the mounted orientation between an electronic device and a double-sided accessory according to an embodiment.
FIG. 11B illustrates a screen displaying content when a first surface of an accessory having a third arrangement according to an embodiment is mounted in an orientation in which the first surface faces the rear surface of an electronic device.
FIG. 11C illustrates a screen displaying content when a second surface of the accessory having the third arrangement according to an embodiment is mounted in an orientation in which the second surface faces the rear surface of an electronic device.
FIG. 11D illustrates a case in which one magnetic body is disposed according to an embodiment.
FIG. 12A illustrates a fourth arrangement of elements for detecting the mounted orientation between an electronic device and a single-sided accessory according to an embodiment.
FIG. 12B illustrates a screen in which content is displayed when a first surface of an accessory having the fourth arrangement according to an embodiment is mounted in an orientation in which the first surface faces the rear surface of an electronic device.
FIG. 12C illustrates a screen on which the operation mode changes when the first surface of the accessory having a fourth arrangement according to an embodiment is mounted in an orientation in which the first surface faces the rear surface of an electronic device.
FIG. 12D illustrates a screen indicating incorrect mounting of the accessory having the fourth arrangement according to an embodiment.
FIG. 13 illustrates a content combination using multiple accessories according to an embodiment.
FIG. 14 illustrates a screen for configuring whether to activate a content grouping function according to an embodiment.
FIG. 15 illustrates a method for receiving, from a server, content corresponding to identification information of an accessory according to an embodiment.
FIG. 16 illustrates a method for sharing content corresponding to identification information of an accessory with another electronic device according to an embodiment.
FIG. 17 illustrates a preview screen of combinable content according to an embodiment.
FIG. 18 illustrates a screen for personalized content customization according to an embodiment.
FIG. 19 illustrates an execution screen of a content-related music application when an accessory according to an embodiment is mounted.
FIG. 20 illustrates an execution screen of a content-related service application when an accessory according to an embodiment is mounted.

In relation to the description of the drawings, the same or similar reference numerals may be used for the same or similar components.

### [Mode for Carrying out the Invention]

Embodiments of the disclosure are hereinafter described in detail, with reference to the drawings, to facilitate practice by those skilled in the art to which the disclosure belongs. However, the disclosure may be implemented in many different forms and is not limited to the embodiments described herein. In connection with the description of the drawings, the identical or similar reference numerals may be used for identical or similar components. Also, in the drawings and related description, descriptions of well-known functions and configurations may be omitted for clarity and brevity.

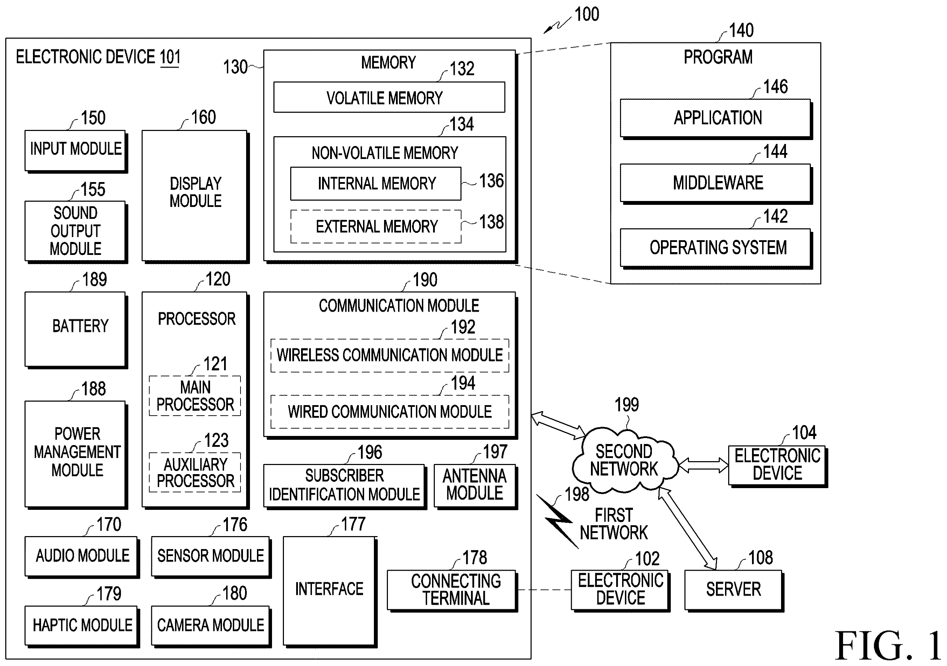

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example.

The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, the same reference numerals in the drawings may be assigned to or omitted for components that are easily understood from prior embodiments, and detailed descriptions may be omitted. The electronic device 101 according to an embodiment disclosed herein may be implemented by selectively combining configurations of different embodiments, and a configuration of an embodiment may be replaced by a configuration of another embodiment. For example, it is noted that the disclosure is not limited to any specific drawing or embodiment.

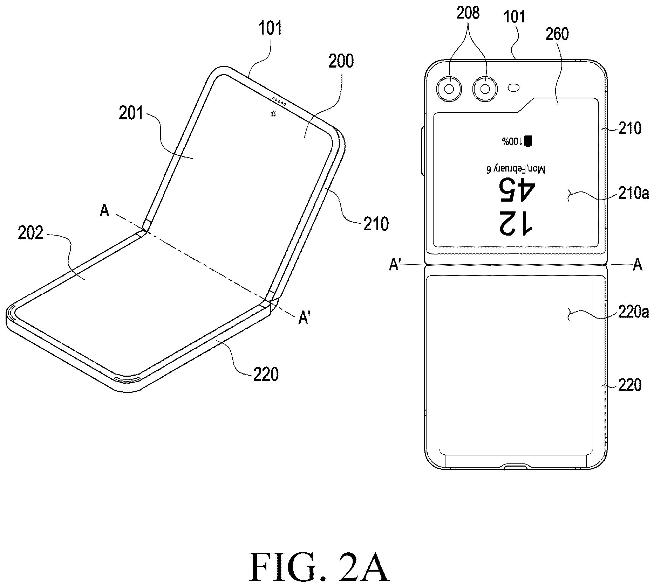

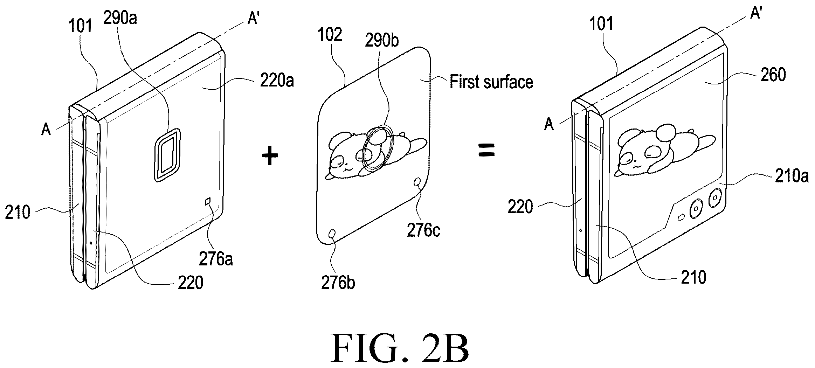

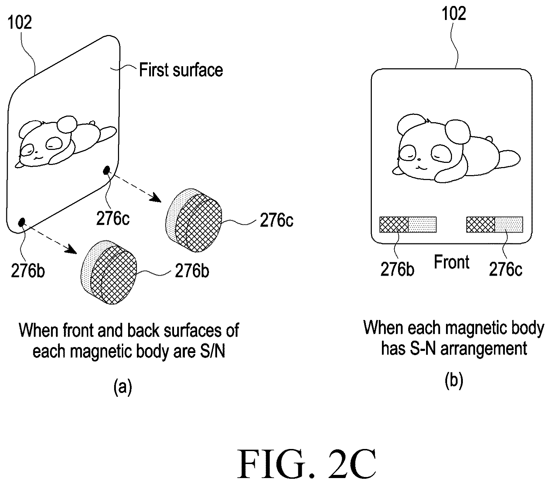

FIG. 2A illustrates the front and rear surfaces of a first-type electronic device according to an embodiment, FIG. 2B illustrates a first-type electronic device displaying content corresponding to mounting of an accessory according to an embodiment, and FIG. 2C illustrates a magnetic body disposed in a card-type accessory according to an embodiment.

Referring to FIGS. 2A to 2C, in an embodiment, a first-type electronic device 101 may include a flexible or foldable display 200 (hereinafter, "display" 200 for short). In the specification, a surface on which the display 200 is disposed is defined as the front surface of the electronic device 101. A surface opposite the front surface is defined as the rear surface of the electronic device 101.

As illustrated inFIGS. 2A to 2C, a foldable housing may include a first housing structure (or structure) 210 and a second housing structure 220. The foldable housing of the electronic device 101 is not limited to the shape and mounting illustrated in FIGS. 2A to 2C, and may be realized by another shape or combinations of components and/or mounting. According to an embodiment, the first housing structure 210 and the second housing structure 220 may be disposed on both sides of a folding axis A-A' and may have shapes that are generally symmetrical about the folding axis A-A'. The first housing structure 210 and the second housing structure 220 may vary in angle or distance from each other depending on whether the electronic device 101 is in an unfolded state, a folded state, or a partially unfolded (or partially folded) intermediate state.

According to an embodiment, when the electronic device 101 is in an unfolded state, the first housing structure 210 and the second housing structure 220 may be arranged to form an angle of 180 degrees and face the same direction. In the unfolded state, the surface of a first display area 201 and the surface of a second display area 202 of the display 200 may form a 180-degree angle with each other and face the same direction (e.g., the front direction of the electronic device 101). According to an embodiment, the display 200 may refer to a display in which at least a partial area may be deformed as a flat or curved surface. The area division of the display 200 illustrated in FIG. 2A is exemplary, and the display 200 may be divided into multiple areas (e.g., four or more, or two or more) based on structure or function.

According to an embodiment, one or more components may be disposed or visually exposed on the rear surface of the electronic device 101. For example, a sub-display 260 may be disposed on the rear surface of the electronic device 101. Additionally, a camera 208 may be disposed on the rear surface of the electronic device 101. Based on the unfolded state, the display 200 disposed on the front surface of the electronic device 101 may be referred to as the front display (or main display), and the display 260 disposed on the rear surface may be referred to as the rear display (or sub-display).

According to an embodiment, when the electronic device 101 is in a folded state (e.g., FIG. 2B), the first housing structure 210 and the second housing structure 220 may be disposed to face each other. The surface of the first housing structure 210 and the surface of the second housing structure 220 of the display 200 may form a narrow angle (e.g., between 0 and 10 degrees) with each other, and may face each other.

The first-type electronic device 101 may be variable between a folded state, an unfolded state, or a partially unfolded state (or a partially folded state). In a state the electronic device 101 is folded in an "in-folding" manner in which the front surface of the electronic device 101 is folded to form an acute angle when viewed in the direction of the folding axis (e.g., A-A'), a first surface 210a faces a second surface 220a. According to an embodiment, the display 260 disposed on the rear surface of the electronic device 101 may be formed to occupy at least a portion of the first surface 210a or most of the area excluding the rear camera 208.

As such, an electronic device including a flexible display may be folded or bent with respect to one axis. The one axis may be predetermined or arbitrary. The fact that an axis is predetermined may mean that only a specific area (e.g., a partial area including the axis) of the flexible display of the electronic device is bendable. On the other hand, the fact that an axis is arbitrary may mean that the entire area of the display of the electronic device is bendable. Although FIGS. 2A and 2B illustrate an electronic device being folded in half about an axis passing through the center of the electronic device, it will be easily understood by those skilled in the art that the location of the axis is not limited.

According to an embodiment, various types of accessories may be attachable to and detachable from the electronic device 101. Hereinafter, a description will be made using a card-type accessory 102 as an example of an accessory that may be attachable to and detachable from the electronic device 101. The card-type accessory 102 may correspond to the external electronic device 102 that communicates directly or wirelessly with the electronic device 101 in FIG. 1

The electronic device 101 may perform control such that content associated with the card-type accessory 102 is output when the accessory 102 is attached to the electronic device 101. For example, the content associated with the accessory 102 may be content mapped based on identification information of the accessory 102 and may include content having graphical elements, such as a theme, a character, and an animation, associated with the accessory 102. Furthermore, the electronic device 101 may perform control to operate the user experience (UX) of a function associated with the accessory 102. For example, when the accessory 102 is mounted, the electronic device 101 may perform control to display an execution screen of an application associated with the accessory 102 on the display 260.

Reference may be made to FIG. 2B to describe a method by which the accessory 102 is mounted to the electronic device 101. Referring to FIG. 2B, the card-type accessory 102 may be mounted to face the second surface 220a of the electronic device 101 in a folded state. For example, the card-like accessory 102 may be attached directly to face the second surface (e.g., the rear surface) 220a of the electronic device 101, or may be mounted or attached to a protective case that covers the electronic device 101. Herein, a case that covers all of the first surface 210a and the second surface 220a of the electronic device 101 or at least a portion of the entire rear surface is referred to as a protective case, but may also be referred to as a cover.

Further, the card-type accessory 102 may be mounted to the protective case of the electronic device 101 in an instable or withdrawable manner. Thus, the protective case may have an accommodation structure that facilitates insertion and withdrawal of the card-type accessory 102. Hereinafter, mounting the accessory 102 to the electronic device 101 may mean that the accessory 102 is physically coupled to, mounted on, or directly attached to the electronic device 101.

The electronic device 101 may provide content corresponding to the accessory 102 when the accessory 102 is mounted to the electronic device 101. According to an embodiment, when the accessory 102 faces the second surface 220a of the electronic device 101 when mounted to the electronic device 101, content associated with the content displayed on the accessory 102 may be output via the display 260 of the electronic device 101. The method in which the electronic device 101 provides the content corresponding to the accessory 102 may include various output methods such as audio output or vibration output in addition to output via the display 260.

According to an embodiment, the electronic device 101 may identify whether the accessory 102 is mounted to the electronic device 101.

In an embodiment, the electronic device 101 may communicate with the accessory 102 to identify whether the accessory is mounted and accessory information. For example, the electronic device 101 may obtain identification information of the accessory 102 from an NFC tag 290b included in the accessory 102 via a near-field communication (NFC) reader 290a included in a communication module (e.g., the communication module 190 in FIG. 1). However, although NFC communication has been described as an example of a method for identifying the accessory 102, the communication may not be limited thereto. For example, any short-range communication between the accessory 102 and the electronic device 101, such as ultra-wideband (UWB) communication, radio frequency identification (RFID) communication, wireless charging-based communication, Bluetooth Low Energy (BLE) communication, or Bluetooth communication, may be possible.

According to an embodiment, the electronic device 101 may identify the accessory 102 through short-range communication with the accessory 102, but may also identify whether the accessory 102 is mounted. For example, in the case of short-range communication such as NFC, the electronic device 101 may recognize the accessory 102 when a user touches the accessory 102 to the electronic device 101. Thus, the electronic device 101 may use short-range communication not only to identify the accessory 102 but also to identify whether the accessory is mounted. In an embodiment, another component of the electronic device 101 may be used to identify not only whether the accessory 102 is mounted, but also the accessory's mounting state, such as mounted orientation. In an embodiment, the electronic device 101 may use at least one sensor to identify a mounting state, such as a state in which the accessory 102 is mounted to the electronic device 101 and a state in which the accessory 102 is disconnected from the electronic device 101. For example, the electronic device 101 may be configured to detect whether the accessory 102 is mounted to the electronic device 101 by detecting a magnetic body of the accessory 102 via a Hall sensor.

According to an embodiment, the electronic device 101 may identify orientations in which the accessory 102 is mounted to the electronic device 101. The mounted orientations may include a first orientation in which a first surface (e.g., a front surface) of the accessory 102 is mounted to the second surface (e.g., the rear surface) 220a of the electronic device 101 (e.g., a front orientation or an orientation in which the rear surface of the accessory 102 is exposed), a second orientation in which a second surface (e.g., a rear surface) of the accessory 102 is mounted to the second surface (e.g., the rear surface) 220a of the electronic device 101 (e.g., a rear orientation or an orientation in which the front surface of the accessory 102 is exposed), a third orientation (e.g., an upright orientation) in which the accessory 102 is mounted to the electronic device 101 in an upright state, or a fourth orientation (e.g., a rear orientation) in which the accessory 102 is mounted to the electronic device 101 in an inverted state. Here, the inverted state may correspond to a state in which the accessory is rotated 180 degrees relative to the upright state.

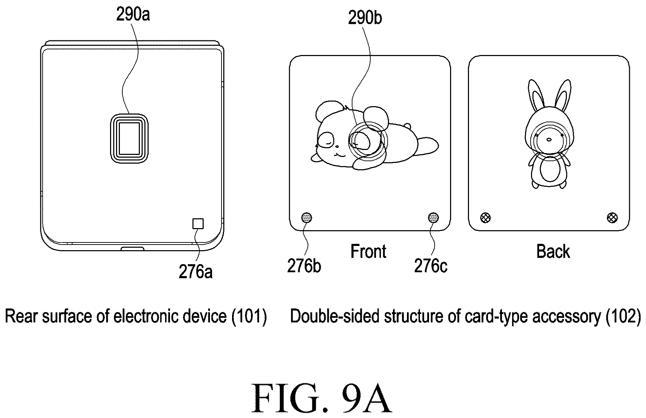

For example, the electronic device 101 may identify the mounted orientation of the accessory 102 based on any one or a combination of the front orientation, the rear orientation, the upright orientation, or the inverted orientation, and a specific description of the mounted orientation will be made later with reference to FIGS. 9A to 12D.

In an embodiment, the electronic device 101 may identify a front orientation or a rear orientation, depending on which of two surfaces of the accessory 102 faces the second surface of the electronic device 101. Furthermore, when identifying the mounted orientation of the accessory 102, the electronic device 101 may also identify whether the accessory 102 is mounted in an upright orientation or an inverted orientation.

As described above, to identify the mounting status and the mounted orientation, the electronic device 101 according to an embodiment may include at least one sensor, and the accessory 102 may include at least one signal applying unit. The electronic device 101 may identify the mounted orientation of the accessory 102 based on a signal from the at least one signal applying unit included in the accessory 102. In order to for the electronic device 101 to detect a signal from the at least one signal applying unit, at least one sensor 276a may be disposed on at least a portion of the second surface 220a of the electronic device 101 so as to face the signal applying unit disposed on the accessory 102. For example, the at least one sensor 276a may include a Hall sensor, and the at least one signal applying unit may include a magnetic body that generates a magnetic force.

FIG. 2B illustrates a case where one sensor 276a is disposed on the electronic device 101, but as illustrated in FIG. 2C, multiple sensors 276a may be disposed. For example, the number of sensors may correspond to or be less than the number of signal applying units disposed on the accessory 102. As illustrated in FIG. 2C, additional sensors 277a, 277b, and 277c, in addition to the sensor 276a, may be disposed at various locations in the electronic device 101, and the number of additional sensors and the locations of the sensors may be determined based on the number and locations of the signal applying units.

Furthermore, FIG. 2B illustrates a case where two signal applying units 276b and 276c are disposed on the accessory 102, wherein the two signal applying units 276b and 276c may be the same magnetic bodies or may include different magnetic bodies. For example, in the case of the card-type accessory 102, which includes, for example, a first surface and a second surface corresponding to a front surface and a rear surface, signal applying units including magnetic bodies of the same polarity or signal applying units including different magnetic bodies may be further disposed in predetermined areas within the accessory 102 to indicate which surface faces the electronic device 101 in which direction.

To specifically illustrate this, reference will be made toFIG. 2C. FIG. 2C illustrates a magnetic body disposed on a card-type accessory according to an embodiment.

(a) in FIG. 2C illustrates a cylindrical magnetic body being disposed on an accessory, and (b) inFIG. 2C illustrates a rod-shaped magnetic body being disposed on an accessory.

First, referring to (a) in FIG. 2C, when a cylindrical magnetic body is disposed on the accessory 102, one pole of a magnetic body 276b or 276c may be disposed to face a first surface of the accessory 102, and the other pole of the magnetic body 276b or 276c may be disposed to face a second surface opposite the first surface of the accessory 102.

For example, when content is to be displayed on the first surface of the accessory 102, the magnetic body may be disposed on the accessory 102 such that the S pole of the magnetic body is on or facing the first surface of the accessory 102 and the N pole of the magnetic body is on or facing the second surface of the accessory 102 (or vice versa). For example, when content is displayed on the second surface of the accessory 102, the magnetic body may be disposed on the accessory 102 such that the S pole of the magnetic body is on or facing the second surface of the accessory 102 and the N pole of the magnetic body is on or facing the first surface of the accessory 102 (or vice versa). For example, when first content is displayed on the first surface of the accessory 102 and second content is displayed on the second surface of the accessory 102, multiple magnetic bodies may be disposed on the accessory 102 such that the S poles of the multiple magnetic bodies are on or facing the first surface of the accessory 102 and the N poles of the multiple magnetic bodies are on or facing the second surface of the accessory 102 (or vice versa).

According to an embodiment, in the case of a cylindrical magnetic body as in (a) in FIG. 2C, the electronic device 101 may identify the mounted orientation of the accessory 102 by using the polarity of the magnetic body detected by the sensor 276a of the electronic device 101.

On the other hand, according to an embodiment, in the case of a rod-type magnetic body as illustrated in (b) in FIG. 2C, the electronic device 101 may identify the mounted orientation of the accessory 102 by using a sensing value (e.g., magnetic force magnitude) of the magnetic body detected by the sensor 276a of the electronic device 101.

Referring to (b) in FIG. 2C, an N pole-S pole arrangement or an S pole-N pole arrangement of a magnetic body may be formed on any one surface of the accessory 102 in line with (or parallel to) the corresponding surface. For example, assuming that a magnetic body having an N pole-S pole arrangement is disposed on a first surface (e.g., the front surface) of the accessory 102 and a magnetic body having an S pole-N pole arrangement is disposed on a second surface (e.g., the rear surface) of the accessory 102, the electronic device 101 may recognize that the front surface of the accessory 102 is mounted on the rear surface of the electronic device 101 as the magnitude of a signal from the magnetic body having the N pole-S pole arrangement is detected by the sensor 276a. Conversely, as the magnitude of a signal from the magnetic body having the S pole-N pole arrangement is detected by the sensor 276a, the electronic device 101 may recognize that the rear surface of the accessory 102 is mounted on the rear surface of the electronic device 101. As such, the polarity and/or magnetic force magnitude of the magnet detected may vary depending on the location of the sensor 276a and the type of magnetic body, and the location of the sensor and the type of magnetic body, used to identify the mounted orientation, may not be limited thereto.

Meanwhile, when the sensor 276a disposed in the electronic device 101 is a Hall sensor, the Hall sensor may measure the magnitude of a signal applied by the signal applying unit. If the Hall sensor senses a signal from the N pole of the magnetic body, a value smaller than an average value may be measured, and if the Hall sensor senses a signal from the S pole of the magnetic body, a value larger than the average value may be measured. Conversely, when the Hall sensor is oriented in the opposite direction, a signal sensing value by the N pole of the magnetic body may be larger than the average value, and a signal sensing value by the S pole of the magnetic body may be smaller than the average value.

In an embodiment, the accessory 102 may include a signal applying unit for applying different magnetic force magnitudes. For example, to indicate that the accessory 102 is mounted to the electronic device 101 in a first mounted orientation, a signal applying unit that applies a magnetic force of a first magnitude (e.g., a magnetic force equivalent to the Earth's magnetic field strength) may be disposed in a predetermined area within the accessory 102. Furthermore, a signal applying unit that applies a magnetic force of a second magnitude (e.g., a magnetic force distinct from the Earth's magnetic field strength) may be disposed in, or omitted from, a predetermined area within the accessory 102 to indicate that the accessory 102 is mounted to the electronic device 101 in a second mounted orientation.

In the same manner as described above, the electronic device 101 may identify the accessory 102 based on identification information, and accordingly determine the type of the accessory 102. For example, the electronic device 101 may determine the type of the accessory, such as whether the accessory 102 is a card-type accessory and, if the accessory 102 is a card-type accessory, whether the accessory 102 is a double-sided or single-sided type, by using the identification information. Furthermore, the electronic device 101 may identify an orientation in which the identified accessory 102 is mounted, based on a signal detected by the at least one sensor 276a. The electronic device 101 may output content corresponding to the identification information and the mounted orientation of the accessory 102.

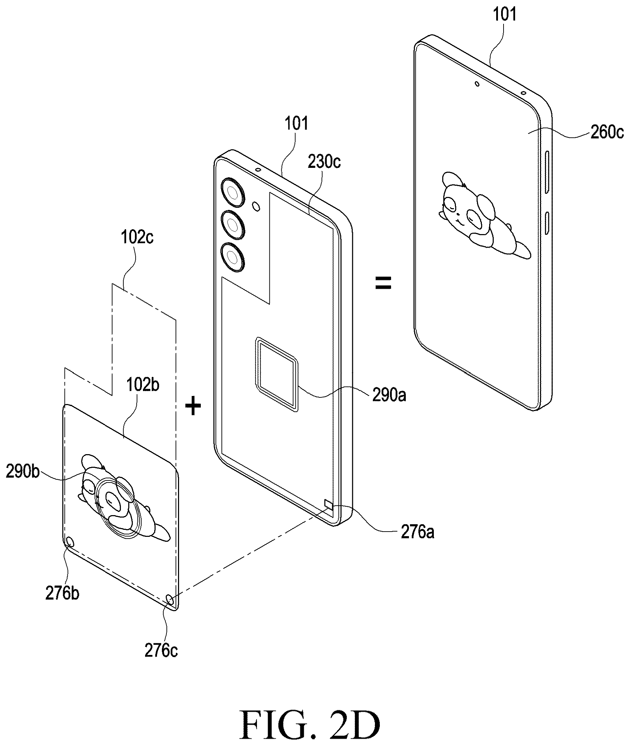

The foregoing has been described using the first-type electronic device 101 as an example, but the type of electronic device to which the accessory 102 is removably attached is not limited thereto. For example, the accessory 102 may also be removably attached to a second-type electronic device 101, as illustrated in FIG. 2D. Here, FIG. 2D illustrates a second-type electronic device displaying content corresponding to mounting of an accessory according to an embodiment.

As illustrated in FIG. 2D, the shape of the accessory mountable to the second-type electronic device 101 may vary. For example, the accessory mountable on the second-type electronic device 101 may be an accessory 102b having the same shape as in FIG. 2B. Furthermore, an accessory 102c having a shape corresponding to an area 230c, which occupies the entire area except for a camera disposed on the rear surface of the second-type electronic device 101, may be mounted on the rear surface of the electronic device 101. When the accessory 102b or 102c is mounted on the electronic device 101, content related to content displayed on the accessory 102b or 102c may be output via a display 260c disposed on the front surface of the electronic device 101. Here, in order to obtain identification information of the accessory 102b or 102c, a communication module 290a of the second-type electronic device 101 may be disposed in one area of the second-type electronic device 101 so as to face the surface to which the accessory 102 is attached. However, at least one sensor 276a disposed on the second-type electronic device 101 may be disposed within a predetermined area to identify the mounted orientation of the accessory 102.

In an embodiment, FIG. 2B illustrates an example in which content associated with the accessory 102 is output (or displayed) on the sub-display 260 of the electronic device 101, but content associated with the content displayed on the accessory 102b or 102c may be output through the display 260c disposed on the front surface of the electronic device 101, as illustrated in FIG. 2D. As such, depending on whether the electronic device 101 is a first type or a second type, the display on which content associated with the accessory 102 is output may vary, and thus the display on which the content is output may not be limited thereto. For example, depending on whether the electronic device 101 is in an unfolded state (e.g., FIG. 2A), a folded state (e.g., FIG. 2B), or a partially unfolded (or partially folded) intermediate state (e.g., FIG. 2A), the display on which content associated with mounting the accessory 102 is output or the screen to which the content is applied (e.g., home screen, AOD, lock screen, or screen saver) may vary.

In an embodiment, the content associated with the accessory 102 may be output in response to recognizing that the accessory 102 is mounted to the electronic device 101, but the timing at which the content associated with the accessory 102 is displayed may not limited thereto.

For example, in an always-on display (AOD) state, the electronic device 101 may display content associated with the mounting of the accessory 102 through an AOD screen in response to recognizing the mounting of the accessory 102. On the other hand, although the accessory 102 is mounted, the output of the content may be limited in a display-off state. In this case, in response to recognizing that the electronic device 101 has switched from the display off state to a display-on state, a screen to which the content has been applied may be displayed. Furthermore, the timing at which the content associated with the mounting of the accessory 102 is displayed may vary, such as a timing of switching from a power-off state to a power-on state, and a timing at which the content associated with the mounting of the accessory 102 is completely downloaded from an external server (e.g., the server 108 in FIG. 1) because the content is not stored in the electronic device 101.

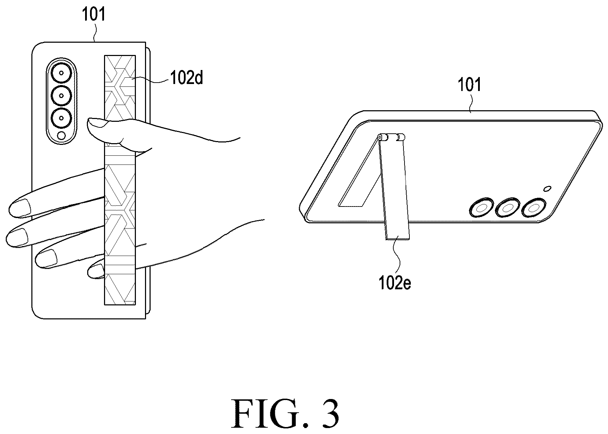

Although the foregoing has been described using an example where the accessory 102 is a card-type accessory, the type of accessory 102 is not limited to the card-type accessory. For example, as illustrated in FIG. 3, the accessory 102 may include various types of accessories 102d and 102e. Here, FIG. 3 illustrates various types of accessories according to an embodiment.

Referring to FIG. 3, accessories of various types and uses, for example, a strap, a holder, or a stand, may be attachable to and detachable from the electronic device 101. According to an embodiment, the various types of accessories 102d and 102e may be equipped with NFC tags, and the electronic device 101 may be equipped with an NFC reader for identifying the accessories 102d and 102e.

Here, the various types of accessories 102d and 102e may be directly attached to and detachable from the electronic device 101 or may be attached to and detached from a protective case (or protective cover) mounted on the electronic device 101. Accordingly, content associated with content displayed on the accessory 102d and 102e, such as images or patterns, may be provided via the display of the electronic device 101. As such, the electronic device 101 may display a graphical UI via the display of the electronic device 101 to correspond to the design of a mounted accessory, thereby providing an interactive visual effect. Furthermore, the electronic device 101 may display an image that is associated with the image displayed on the accessory 102, thereby providing an aesthetic effect to the user.

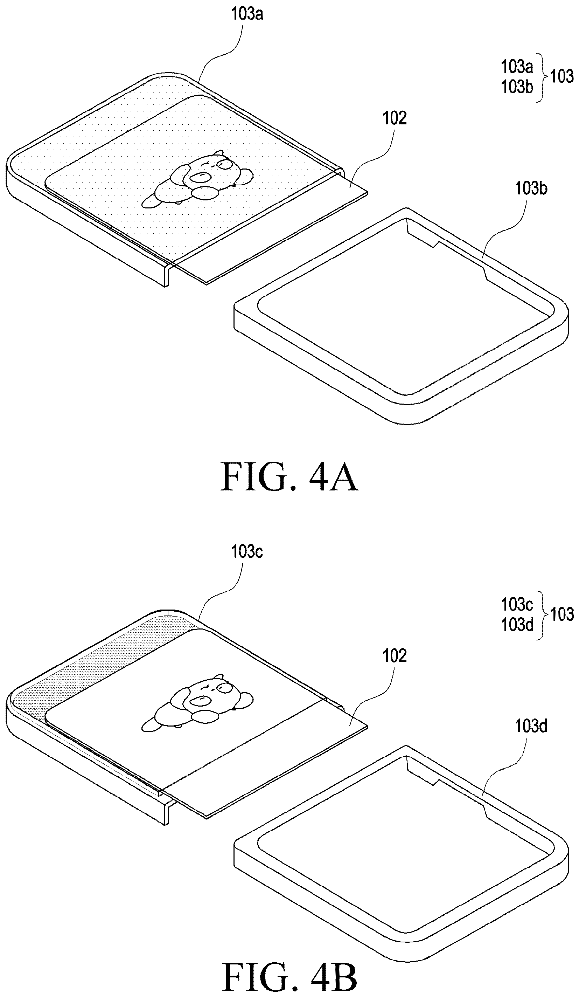

FIG. 4A illustrates a card-type accessory and a first-type protective case according to an embodiment, and FIG. 4B illustrates a card-type accessory and a second-type protective case according to an embodiment.

Referring to FIG. 4A, a protective case 103 may be implemented in a form that includes, for example, a cover 103b that is mounted on a first surface (e.g., the first surface 210a in FIG. 2B) of an electronic device 101 in a folded state, and a cover 103a that is mounted on a second surface (e.g., the second surface 220a in FIG. 2B) of the electronic device 101. As illustrated in FIG. 4A, the protective case 103 may be a transparent case such that a display (e.g., the display 260 in FIG. 2B) of the electronic device 101 is visually exposed when the cover 103b is mounted on the first surface (e.g., the first surface 210a in FIG. 2B) of the electronic device 101. Furthermore, the cover 103a mounted on the second surface (e.g., the second surface 220a in FIG. 2B) of the electronic device 101 may also be a transparent case such that when a removable card-type accessory 102 is accommodated in the protective case 103, content (e.g., an image) displayed on the accessory 102 is visually exposed while the accessory 102 is accommodated.

The cover 103a in FIG. 4A may have a structure in which one surface of the cover 103a is open such that the accessory 102 is mounted in contact with the rear surface of the electronic device 101. The accessory 102 may be inserted into an empty space between the electronic device 101 and the transparent cover 103a covering a portion of the rear surface of the electronic device 101 so that the accessory 102 may be in direct contact with the electronic device 101.

On the other hand, a protective case 103 in FIG. 4B may be implemented in a form that includes a cover 103d and a cover 103c. Here, the cover 103d is substantially the same as the cover 103b in FIG. 4A, but the cover 103c may have an accommodation structure different from that of the cover 103a in FIG. 4A. The accessory 102 may be mounted to the electronic device 101 by being inserted into the accommodation structure of the transparent cover 103c.

According to an embodiment, the shape of the protective case 103 may vary depending on the exterior of the electronic device 101, and, for example, may be a shape that can cover the entirety of the electronic device 101 in a folded state. As described above, because the card-type accessory 102 is attachable to and detachable from the protective case 103, a user may purchase only various card-type accessories 102, and thereby be provided a useful experience in decorating the electronic device 101.

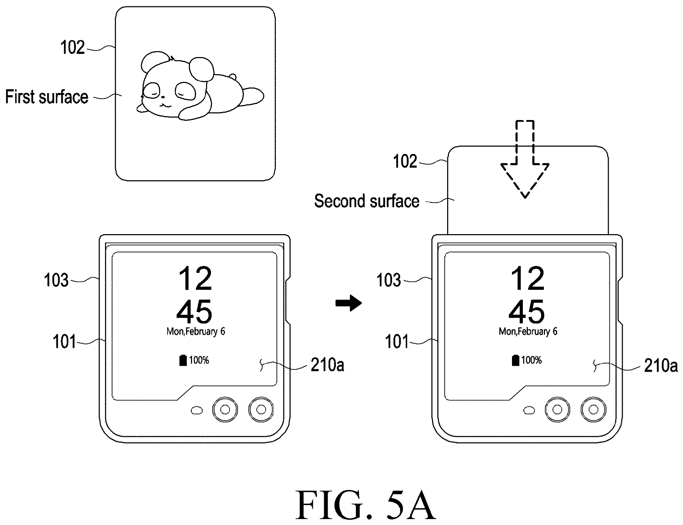

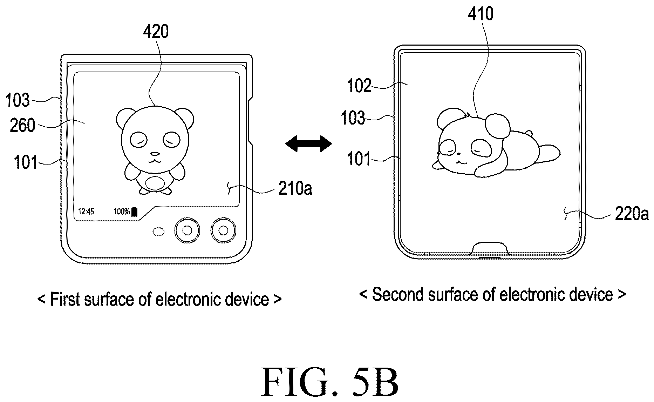

FIG. 5A illustrates a method for mounting an accessory according to an embodiment, and FIG. 5B illustrates the front and rear surfaces of an electronic device when an accessory according to an embodiment is mounted.

Referring to FIGS. 5A and 5B, cases are illustrated in which a protective case 103 is mounted on the exterior of the electronic device 101, and a card-type accessory 102 is mounted to the electronic device 101 on which the protective case 103 is mounted. Here, the card-type accessory 102 may be a single-sided accessory with content displayed only on a first surface.

In the electronic device 101 in the folded state, the display 260 disposed on a first surface 210a may be visually exposed through a transparent window of the protective case 103. The accessory 102 may be mounted by being accommodated in the protective case 103, in which case content 410 displayed on the first surface of the accessory 102 may be visually exposed through the transparent window of the protective case 103. On the other hand, a second surface of the accessory 102 may face a second surface 220a of the electronic device 101.

When the electronic device 101 in the folded state is equipped with the accessory 102, the display 260 disposed on the first surface 210a of the electronic device 101 may display content 420 associated with the content 410 displayed on the first surface of the accessory 102. For example, when a user is looking at the first surface 210a of the electronic device 101 in a folded state, the user may see the content 420 associated with the accessory 102, and when the user is looking at the second surface 220a of the electronic device 101, the user may see the content 410 displayed at on the first surface of the accessory 102 exposed through the transparent protective case 103. If the content displayed on the accessory 102 is referred to as a first character, the content provided through the display 260 of the electronic device 101 may be provided by a content provider, such as a manufacturer or a copyright holder of the accessory corresponding to the first character. The content associated with the first character, which is output via the electronic device 101, may include an animation in which the first character is moving. For example, as the user touches the content displayed on the display 260, the content of the first character in various motions or in various forms may be displayed.

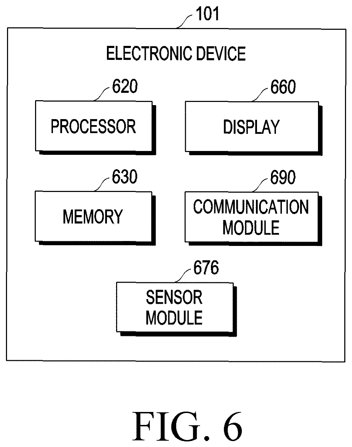

FIG. 6 is an internal block diagram of an electronic device for performing operations according to accessory mounting according to an embodiment. An electronic device 101 in FIG. 6 may be the electronic device 101 in FIG. 1. Furthermore, the electronic device 101 in FIG. 6 may have substantially the same configuration as the electronic device 101 in FIG. 1.

Referring to FIG. 6, the electronic device 101 may include at least one processor 620, memory 630, a display 660, a sensor module 676, and/or a communication module 690.

According to an embodiment, the memory 630 (e.g., the memory 130 in FIG. 1) may be electrically connected to the processor 620 (e.g., the processor 120 in FIG. 1) and may store at least one application (e.g., the application 146 in FIG. 1). The memory 630 may store control programs for controlling the electronic device 101, UIs related to applications provided by a manufacturer or downloaded from the outside, and images user information, documents, databases, or related data for providing UIs.

According to an embodiment, the memory 630 may store content that is mapped to identification information of an accessory. For example, the memory 630 may pre-store content that is mapped to identification information of an accessory. If there is no pre-stored content in the memory 630, a message asking the user whether to download the content may be output, and in response to the user's consent, content corresponding to the identification information of the accessory may be requested and downloaded from a server 108. To this end, the processor 620 may transmit the identification information of the accessory to the server 108 and download the content corresponding to the identification information from the server 108. The processor 620 may also search the downloaded content for content corresponding to the identification information and mounted orientation of the accessory, and may control the display 660 to output the found content.

Thus, the method of when and from where content mapped to identification information of an accessory is provided and stored is not limited thereto. For example, in the case of an accessory that includes memory capable of storing content, when the accessory is mounted, the content may be received directly from the accessory along with the accessory's identification information and stored in the memory 630.

According to an embodiment, the memory 630 may store instructions that, when executed, control the processor 620 to perform various operations. According to an embodiment, the memory 630 may be operatively connected to the display 660 (e.g., the display module 160 in FIG. 1), the communication module 690 (e.g., the communication module 190 in FIG. 1), the sensor module 676 (e.g., the sensor module 176 in FIG. 1) including at least one sensor, and the processor 620 (e.g., the processor 120 in FIG. 1) and may store instructions configured to: obtain identification information of the accessory 102 via the communication module; based on a signal detected by the at least one sensor as the accessory is mounted on an electronic device, identify an orientation in which the accessory is mounted on the electronic device; and output content corresponding to the identification information and the mounted orientation.

According to an embodiment, the display 660 may detect a touch in addition to supporting both data input and output functions. The display 660 may be referred to as a touch screen. The display 660, when implemented in the form of a touch screen, may display various pieces of information that is generated in response to a user's touch motion. The display 660 may be the display module 160 described above with reference to FIG. 1.

According to an embodiment, the communication module 690 may, under the control of the processor 620, communicate with surrounding external devices. According to an embodiment, the communication module 690 may perform communication by using at least one of communication methods including Bluetooth, Zigbee, Z-Wave, Wi-Fi, ultra-wideband (UWB), wireless USB, and near-field communication (NFC).

The processor 620 may be connected to surrounding external devices in a designated communication method. For example, the processor 620 may communicate with at least some of at least one external device (e.g., a primary accessory) by using a first type of communication and with at least some of the other external devices (e.g., a secondary accessory) by using a second type of communication. The processor 620 may obtain identification information of an accessory (e.g., 102 in FIGS. 2B and FIG. 2C, 102b or 102c in FIG. 2D, or 102d or 102e in FIG. 3) from the accessory via the communication module 690.

In an embodiment, the communication module 690 is a short-range communication module and may include an NFC module (or NFC writer and/or reader) for identification of an accessory. For example, the processor 620 may use the NFC writing function of the NFC module to write data (e.g., user-generated content) to the accessory. The accessory may also provide information related to the accessory, such as identification information, to the electronic device 101. To this end, the accessory may include an NFC tag. Here, the identification information may include at least one of the type of accessory, a product name, an ID, or additional information. For example, in the case of a card-type accessory, the identification information may include at least one of information indicating that the accessory is a card-type accessory, information indicating that the accessory is a double-sided or single-sided accessory.

In an embodiment, the sensor module 676 may include at least one sensor for identifying whether an accessory is mounted. Furthermore, when an accessory is mounted, the processor 620 may use the at least one sensor to identify the mounted orientation of the accessory. When the processor 620 has obtained the identification information of the accessory, but when there is no signal detected by the at least one sensor, this corresponds to a state in which the accessory is incorrectly mounted, and thus the processor 620 may control information indicating the mis-mounting of the accessory to be output via the display 660 or a notification sound.

For example, at least one sensor (e.g., 276a in FIG. 2B or 276a in FIG. 2C) may be disposed on at least a portion of the rear surface (e.g., the second surface 220a in FIG. 2B) of the electronic device 101 so as to face at least one of two or more signal applying units disposed on the accessory. Here, the rear surface of the electronic device 101 may be located opposite to the display (e.g., 260 in FIG. 2B) of the electronic device 101.

The processor 620 may identify whether an accessory is mounted and the mounted orientation of the accessory, based on a signal from at least one signal applying unit included in the accessory. In order for the processor 620 to detect the signal from the at least one signal applying unit, at least one sensor may be disposed on at least a portion of the second surface 220a of the electronic device 101 to face the signal applying unit disposed on the accessory. For example, the at least one sensor may include a Hall sensor, and the at least one signal applying unit may include a magnetic body that generates a magnetic force.

According to an embodiment, in the case of a certified accessory (e.g., a genuine accessory), the location of a signal applying unit of the accessory 102 is fixed, so the processor 620 may identify whether the accessory is mounted, by using a signal that the signal applying unit applies to the at least one sensor of the electronic device 101. For example, in the case of a certified accessory, a magnetic body is disposed at a location determined by an operator at the time the accessory is manufactured, so the processor 620 may determine whether the accessory is mounted, based on a signal measured by the at least one sensor. For example, when a magnetic signal equal to or greater than a threshold value is detected, the processor 620 may recognize that the detection is caused by the mounting of the accessory. The processor 620 may identify the mounted orientation of the accessory based on the detected signal, and may authenticate and identify the accessory by using identification information of the accessory. When the accessary is mounted in such a way that the location of the signal applying unit does not face the at least one sensor, the signal measured by the at least one sensor may not be detected. In this case, the processor 620 may use the display 660 to display information indicating the incorrect mounting of the accessory.

As described above, the processor 620 may use at least one sensor to identify whether the accessory is mounted and the mounted orientation of the accessary. For example, in the case of a card-type accessory, the processor 620 may identify the mounted orientation, based on any one or a combination of a front orientation in which the front surface of the accessory faces the rear surface of an electronic device, a rear orientation in which the rear surface of the accessory faces the rear surface of the electronic device, an upright orientation in which the accessory is mounted in an upright state, or an inverted orientation in which the accessory is rotated 180 degrees relative to the upright orientation. In an embodiment, when a signal indicating mounting of the accessory is detected by the at least one sensor, the processor 620 may identify the mounted orientation, based on the detected signal.

The processor 620 may perform control such that content corresponding to the identification information and mounted orientation of an accessory is displayed through the display 660. For example, the content displayed on the display 660 may be content associated with the accessory and may include at least one of a theme, an image, an animation, a video, a coupon service, an application execution screen, a home screen, a lock screen, or an operation mode (e.g., study mode, sleep mode, or private mode). The content may be any graphical data that can be output (or displayed) or played back via the display 660. Furthermore, in addition to graphical elements, the content may also include various types of vibrations or various sounds, such as music or notification sound, that can be output via a speaker of the electronic device 101.

In an embodiment, the processor 620 may identify not only whether an accessory is mounted, but also whether the accessory is detached (or removed or unmounted). For example, after detecting a signal at a designated location and obtaining identification information of an accessory, when the detection of the signal is stopped, the processor 620 may recognize that the accessory has been detached. The processor 620 may stop the output of content corresponding to the identification information of the accessory stored in the memory 630 when the accessary is detached (or removed). For example, the processor 620 may immediately delete the content for which the output has been stopped, but may manage the content in an unapplied state without deleting the content. For example, when content associated with the removed accessory is content that is available for a designated period of time, the content and usage right information for the content may be stored in the memory 630 for the designated period of time, and the processor 620 may manage the content to be deleted after the designated period of time has elapsed. Accordingly, when the detached accessory is remounted or when a new accessory is mounted, it may be possible to apply, as an output target content, content associated with the mounted accessory among contents which are associated with the detached accessory and are being managed. For example, when the usage right for content associated with a detached accessory remains valid, the applied state of the content (e.g., theme) may be maintained even after the accessory is detached. Alternatively, when an accessory is detached, the processor 620 may display a guide asking whether to change the current content (e.g., theme), thereby performing control to allow the user to select whether to maintain the applied state of the current content or to apply default content.

The processor 620 may identify whether another accessory is mounted after the detachment of the accessory. If the other accessory is mounted, the processor 620 may identify whether the other accessory is mounted, and may identify content corresponding to the other accessory's identification information and mounted orientation. The processor 620 may output the identified content corresponding to the other accessory's identification information and mounted orientation. Furthermore, the processor 620 may control to output corresponding content, based on the identification information of the accessory and the other accessory. For example, the processor 620 may output content that is obtained by combining (or mixing) content of a first accessory and content of a second accessory. Furthermore, the processor 620 may output content that is related to the content of the first accessory and the content of the second accessory. Furthermore, the processor 620 may output new content that is unrelated to the content of the first accessory and the content of the second accessory.

The processor 620 may output the content corresponding to the other accessory via the display 660. Furthermore, the processor 620 may output content corresponding to a combination of the previous accessory and the other accessory via the display 660. To this end, the processor 620 may identify whether the content of the previous accessory is associated with the content of the other accessory. For example, based on the identification information of the previous accessory and the identification information of the other accessory, the processor 620 may identify whether the accessories correspond to accessories designated as one group. If the accessory belongs to one group, based on the user selection, the processor 620 may generate content in which the content corresponding to the identification information of the other accessory is combined with the content corresponding to the previous accessory, based on a synthetic algorithm. The processor 620 may use the display 660 to output the content generated by the combination.

If there are multiple previous accessories, there may also be multiple types of content that can be combined with the content corresponding to the currently mounted accessory. In such a case, when the multiple accessories are attached and detached sequentially according to a user configuration that allows content combination, a combination between pieces of content corresponding to accessories belonging to one group may be possible. Accordingly, the processor 620 may update the content corresponding to the current mounted accessory into new content by combining (or mixing) the content corresponding to the current mounted accessory with multiple types of content, and output the new content.

According to an embodiment, as an accessory is mounted on the electronic device 101, the processor 620 may obtain, from the server 108, content based on identification information of the accessory and mounted history information of at least one other accessory. The processor 620 may perform control to output the content obtained from the server 108. For example, when there is a history in which accessories other than the accessory have been mounted to the electronic device 101, the server 108 may identify, based on identification information of the accessory transmitted from the electronic device 101, mounted history information of other accessories belonging to a group associated with the identification information. Based on the mounted history information, the server 107 may generate content by combining pieces of content of the accessories, or may select available content to provide the same to the electronic device 101.

According to an embodiment, an electronic device 101 may include a display 160 or 660, a short-range communication module 190 or 690, at least one sensor 176 or 676, at least one processor 120 or 620, and memory 130 or 630 configured to store instructions. According to an embodiment, the instructions may be configured to, when executed by the at least one processor, cause the electronic device to obtain identification information of an accessory 102 via the short-range communication module. According to an embodiment, the instructions may be configured to cause the electronic device to identify, based on a signal detected by the at least one sensor as the accessory is mounted to the electronic device, an orientation in which the accessory is mounted to the electronic device. According to an embodiment, the instructions may be configured to cause the electronic device to output content corresponding to the identification information and the mounted orientation.

According to an embodiment, the instructions may be configured to cause the electronic device to identify the mounted orientation based on any one or a combination of a first orientation in which the front surface of the accessory is mounted on the rear surface of the electronic device, a second orientation in which the rear surface of the accessory is mounted on the rear surface of the electronic device, a third orientation in which the accessory is mounted to the electronic device in an upright state, or a fourth orientation in which the accessory is mounted to the electronic device in an inverted state.

According to an embodiment, the instructions may be configured to cause the electronic device to output first content associated with the rear surface of the accessory, when the mounted orientation is the first orientation.

According to an embodiment, the instructions may be configured to cause the electronic device to output second content associated with the front surface of the accessory when the mounted orientation is the second orientation.

According to an embodiment, the instructions may be configured to cause the electronic device to identify whether the mounted orientation of the accessory is an upright orientation in which the accessory is mounted to the electronic device in an upright state or an inverted orientation in which the accessory is mounted to the electronic device in an inverted state.

According to an embodiment, the instructions may be configured to cause the electronic device to output third content associated with the accessory when the mounted orientation is the upright orientation.

According to an embodiment, the instructions may be caused to cause the electronic device to, when the mounted orientation is the inverted orientation, output fourth content different from the third content or operate in a designated mode.

According to an embodiment, the instructions may be configured to cause the electronic device to obtain the identification information of the accessory and, when there is no signal detected by the at least one sensor, output information indicating incorrect mounting of the accessory via the display.

According to an embodiment, the instructions may be configured to cause the electronic device to obtain the identification information of the accessory from an NFC tag included in the accessory via a near-field communication (NFC) reader included in the short-range communication module.

According to an embodiment, the at least one sensor may include a Hall sensor, wherein a signal applying unit disposed on the accessory may include a magnetic body configured to generate a magnetic force.

According to an embodiment, the instructions may be configured to cause the electronic device to identify the orientation in which the accessory is mounted by identifying, via the at least one sensor, the polarity of the signal applying unit disposed on the accessory.

According to an embodiment, the instructions may be configured to cause the electronic device to, as the accessory is mounted on the electronic device, obtain from a server content based on identification information of the accessory and mounted history information of at least one other accessory, and output the obtained content.

According to an embodiment, the instructions may be configured to cause the electronic device to, when the identification information of the accessory is obtained, transmit the obtained identification information to the server and download content corresponding to the identification information from the server.

According to an embodiment, the accessory may be mounted to the electronic device by being inserted into an empty space between the electronic device and a transparent protective case configured to cover a portion of the rear surface of the electronic device, or may be mounted to the electronic device by being inserted into an accommodation structure of the transparent protective case.

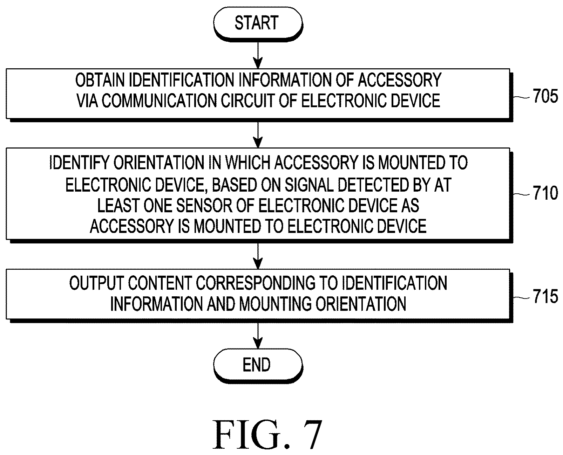

FIG. 7 is an operation flowchart for performing operations according to mounting of an accessory in an electronic device according to an embodiment.

Referring to FIG. 7, an operation method may include operations 705 to 715. Each of the operations of the operation method in FIG. 7 may be performed by an electronic device (e.g., the electronic device 101 in FIGS. 1 to 6) or at least one processor (e.g., the processor 120 in FIG. 1 or the processor 620 in FIG. 6) of the electronic device. In an embodiment, at least one of operations 705 to 715 may be omitted, the order of some operations may be changed, other operations may be added, and at least two operations may be performed in parallel.

According to an embodiment, in operation 705, the electronic device 101 may perform an operation of obtaining identification information of an accessory (e.g., 102 in FIGS. 2B and 2C) via a short-range communication module (e.g., the communication module 690 in FIG. 6) of the electronic device 101. The short-range communication module may be a component for NFC communication between the electronic device 101 and the accessory.

In an embodiment, the electronic device 101 may obtain the identification information of the accessory from an NFC tag included on the accessory via an NFC reader included in the short-range communication module.

In operation 710, the electronic device 101 may identify an orientation in which the accessory is mounted to the electronic device 101, based on a signal detected by at least one sensor (e.g., 276a in FIG. 2B or at least one sensor 676 included in the sensor module in FIG. 6) of the electronic device 101 as the accessory is mounted to the electronic device 101. According to an embodiment, the at least one sensor may include a Hall sensor, and signal applying units (e.g., 276b and 276c in FIG. 2B) disposed on the accessory may include a magnetic body that generates a magnetic force.

According to an embodiment, the at least one sensor may be disposed on at least a portion of the rear surface (e.g., 220a in FIG. 2B) of the electronic device 101 to face at least one of the signal applying units disposed on the accessory, and the rear surface of the electronic device 101 may be located opposite to the display.

In an embodiment, the accessory may be a card-type accessory.

According to an embodiment, the electronic device 101 may identify the mounted orientation, based on any one or a combination of a first orientation (e.g., front orientation) in which the front surface of the accessory is mounted on the rear surface of the electronic device 101, or in a second orientation (e.g.: rear orientation) in which the rear surface of the accessory is mounted on the rear surface of the electronic device 101, a third orientation (e.g., upright orientation) in which the accessory is mounted to the electronic device 101 in an upright state, or a fourth orientation (e.g., inverted orientation) in which the accessory is mounted to the electronic device 101 in an inverted state.

According to an embodiment, the identifying of the orientation in which the accessory is mounted to the electronic device 101 may include identifying, via the Hall sensor included in the at least one sensor, the polarity of the signal applying units disposed on the accessory.

In operation 715, the electronic device 101 may output content corresponding to the identification information and the mounted orientation. For example, the electronic device 101 may output the content via a display (e.g., the display 660 in FIG. 6) of the electronic device 101. Furthermore, the electronic device 101 may output the content by using various output methods, such as audio output or vibration output, in addition to outputting via a display.

According to an embodiment, the electronic device 101 may output first content associated with the rear surface of the accessory and the identification information of the accessory when the mounted orientation is the first orientation.

According to an embodiment, the electronic device 101 may output second content associated with the front surface of the accessory and the identification information of the accessory when the mounted orientation is the second orientation.

According to an embodiment, the electronic device 101 may identify whether the mounted orientation of the accessory is an upright orientation in which the accessory is mounted to the electronic device 101 in an upright state, or an inverted orientation in which the accessory is mounted to the electronic device 101 in an inverted state.

According to an embodiment, the electronic device 101 may output third content associated with the accessory when the mounted orientation is the upright orientation.

According to an embodiment, the electronic device 101 may control to, when the mounted orientation is the inverted orientation, output fourth content associated with the accessory or to operate in a designated mode.

According to an embodiment, the electronic device 101 may obtain the identification information of the accessory and, when there is no signal detected by the at least one sensor, output information indicating the incorrect mounting of the accessory via the display.

According to an embodiment, the electronic device 101 may, as the accessory is mounted to the electronic device 101, obtain content based on the identification information of the accessory and mounted history information of at least one other accessory from the server 108, and output the obtained content.

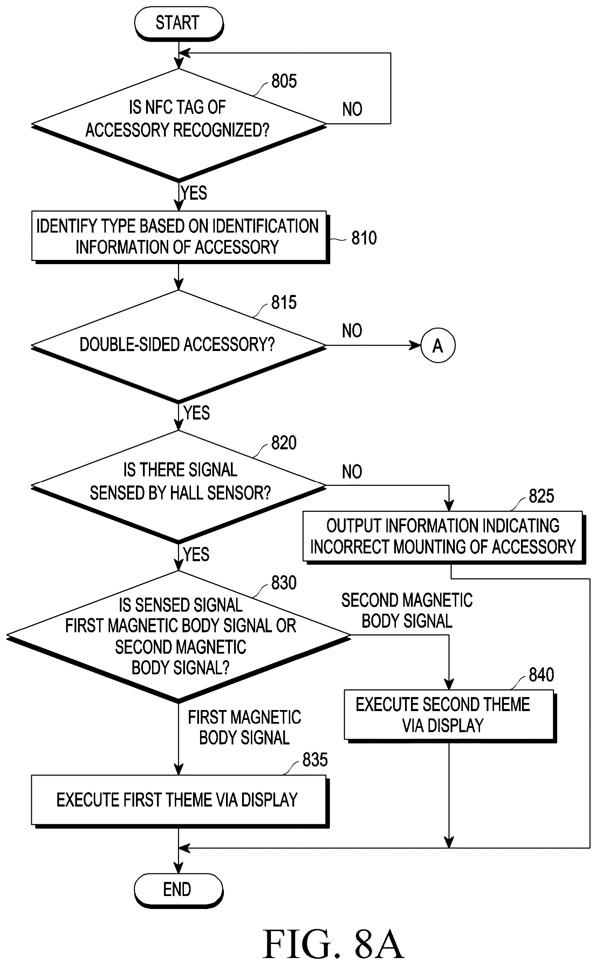

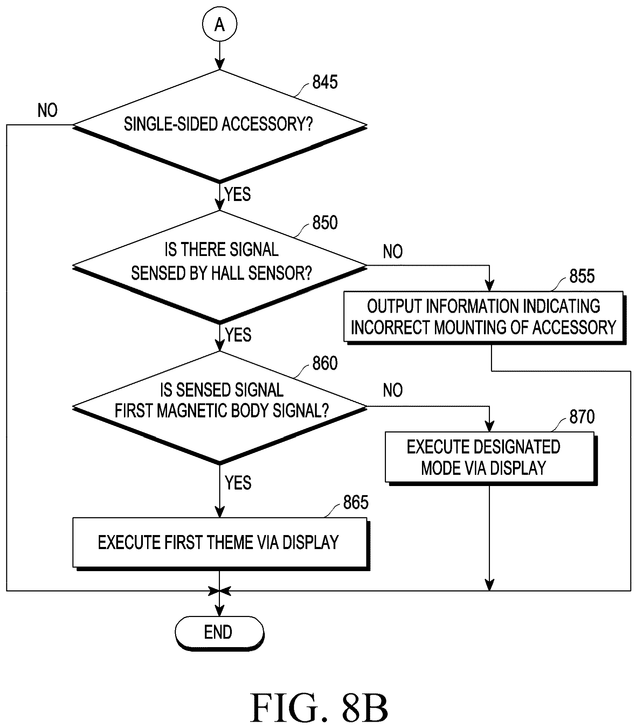

FIG. 8A is a flowchart of operations for providing content corresponding to a mounted orientation of an accessory according to an embodiment, and FIG. 8B is a flowchart of operations following FIG. 8A.

Referring to FIGS. 8A and 8B, an operation method may include operations 805 to 870. Each of the operations of the operation method in FIGS. 8A and 8B may be performed by an electronic device (e.g., the electronic device 101 in FIGS. 1 to 6) or at least one processor (e.g., the processor 120 in FIG. 1 or the processor 620 in FIG. 6) of the electronic device. In an embodiment, at least one of operations 805 to 870 may be omitted, the order of some operations may be changed, other operations may be added, and at least two operations may be performed in parallel. Here, to indicate that operation 815 in FIG. 8A and operation 845 in FIG. 8B are connected to each other, an identification symbol "A" is used to illustrate the connection. In addition, to aid in understanding of the description in FIGS. 8A and 8B, reference will be made to FIGS. 9A to 12D.

Referring to FIG. 8A, in operation 805, an electronic device 101 may identify whether an NFC tag of an accessory has been recognized. In response to recognizing the NFC tag of the accessory, the electronic device 101 may identify, in operation 810, a type based on identification information of the accessory. For example, based on the identification information, the electronic device 101 may identify whether the accessory is a card type, and when the accessory is a card-type accessory, may identify whether the accessory is a double-sided type or a single-sided type.

In operation 815, the electronic device 101 may identify whether the accessory is a double-sided type. Here, when a double-sided accessory is not identified, operation 845 in FIG. 8B may be performed, and will be described later. On the other hand, based on identification of the double-sided accessory, in operation 820, the electronic device 101 may identify whether there is a signal sensed by a Hall sensor. If the identification information of the accessory is identified but no signal is sensed by the Hall sensor, this corresponds to a case in which a signal from a signal applying unit disposed on the accessory is not detected, and thus may indicate that the accessory is incorrectly mounted. Accordingly, in operation 825, the electronic device 101 may output information indicating the incorrect mounting of the accessory.

If there is a signal sensed by the Hall sensor, in operation 830, the electronic device 101 may identify whether the sensed signal is a first magnetic body signal or a second magnetic body signal. When the sensed signal corresponds to the first magnetic body signal, in operation 835, the electronic device 101 may execute a first theme via a display. Here, the first theme may be a theme corresponding to identification information of the accessory and the first mounted orientation, and may be associated with a first surface of the accessory. On the other hand, when the sensed signal corresponds to the second magnetic body signal, in operation 840, the electronic device 101 may execute a second theme via the display. Here, the second theme may be a theme corresponding to identification information of the accessory and a second mounted orientation different from the first mounted orientation, and may be associated with a second surface of the accessory.

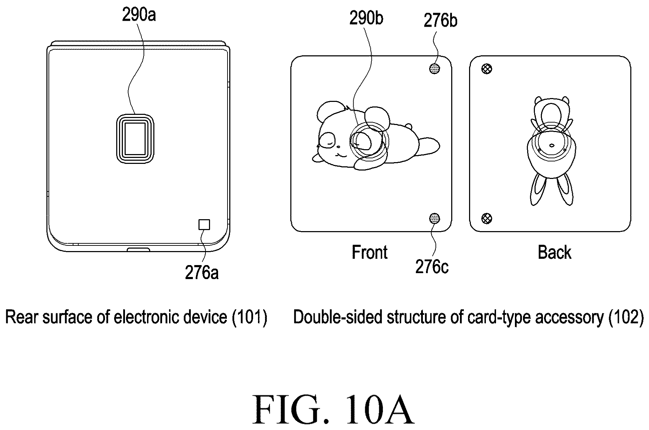

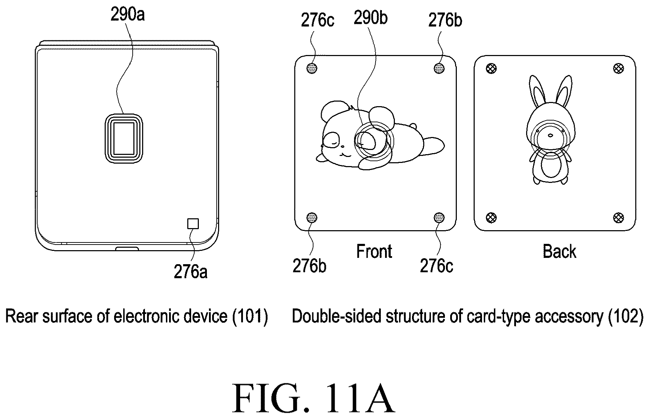

According to an embodiment, the signal applying unit (e.g., a magnetic body configured to generate a magnetic force) disposed in the double-sided accessory and the Hall sensor of the electronic device 101 may have an arrangement structure as illustrated in FIG. 9A, FIG. 10A, or FIG. 11A. Here, FIG. 9A illustrates a first arrangement of elements for detecting a mounted orientation between an electronic device and a double-sided accessory according to an embodiment, FIG. 10A illustrates a second arrangement of elements for detecting a mounted orientation between an electronic device and a double-sided accessory according to an embodiment, and FIG. 11A illustrates a third arrangement of elements for detecting a mounted orientation between an electronic device and a double-sided accessory according to an embodiment.

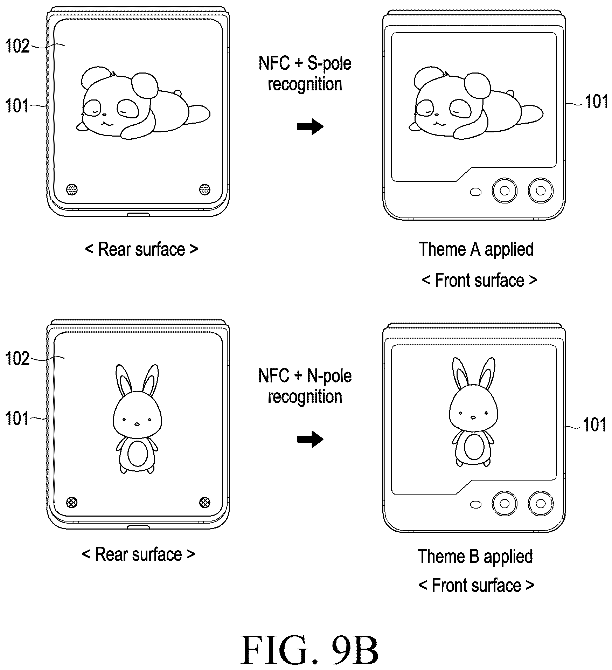

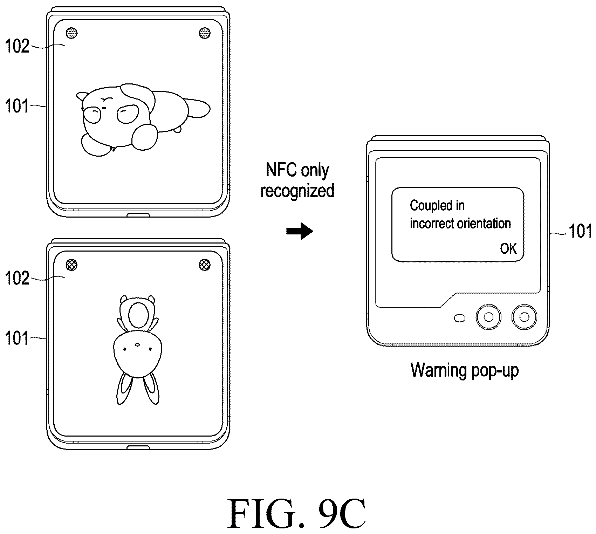

According to an embodiment, FIG. 9A illustrates a case in which a first magnetic body 276b is disposed in a designated first area (e.g., bottom left) of the accessory, and a second magnetic body 276c is disposed in a second area (e.g., bottom right). FIG. 9B illustrates a screen in which different types of content are displayed depending on first and second mounted orientations of an accessory having a first arrangement according to an embodiment, and FIG. 9C illustrates a screen indicating incorrect mounting of an accessory having a first arrangement according to an embodiment.

Referring to FIGS. 9A to 9C, to detect a signal generated by the first magnetic body 276b or the second magnetic body 276c, a Hall sensor 276a may be disposed on the rear surface of the electronic device 101 at a location where the Hall sensor 276a faces one of the first magnetic bodies 276b and 276c when mounted. FIG. 9A illustrates a case in which a cylindrical magnetic body is disposed on the accessory 102, such that one pole of the magnetic body faces a first surface of the accessory 102, and the other pole of the magnetic body faces a second surface of the accessory 102 opposite to the first surface of the accessory 102. As illustrated in FIG. 9A, each of the magnetic bodies 276b and 276c may be disposed to output the same polarity on the front surface of the accessory 102. For example, in the case of a double-sided accessory 102 in which first content is displayed on the front surface of the accessory 102 and second content is displayed on the rear surface of the accessory 102, first poles (e.g., N poles) of the magnetic bodies 276b and 276c may face the front surface of the accessory 102, and second poles (e.g., S poles) of the magnetic bodies 276b and 276c may face the rear surface of the accessory 102.

For example, referring to FIG. 9B, when a signal (e.g., an S-pole signal) generated by the second magnetic body 276c is detected as the accessory 102 is mounted to the electronic device 101, the electronic device 101 may output a screen to which theme A is applied, based on identification information and a mounted orientation, for example, NFC and S-pole recognition. On the other hand, in FIG. 9B, when a signal (e.g., an N-pole signal) generated by the first magnetic body 276b is detected as the accessory 102 is mounted to the electronic device 101, the electronic device 101 may output a screen to which theme B is applied, based on NFC and N-pole recognition.

Meanwhile, when the electronic device 101 has identified the accessory 102, as illustrated in FIG. 9C, but a signal indicating mounting of the accessory 102 is not detected by the Hall sensor 276a, for example, when only NFC is recognized, the electronic device 101 may output information indicating that the accessory is mounted in an incorrect orientation. For example, when the accessory is mounted in an inverted state, the electronic device 101 may display a warning pop-up indicating incorrect mounting because none of the magnetic bodies on the accessory 102 face the Hall sensor of the electronic device 101.

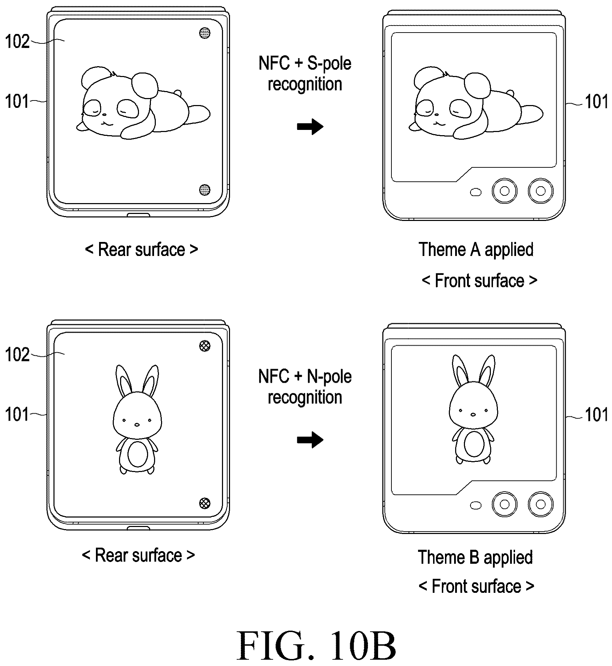

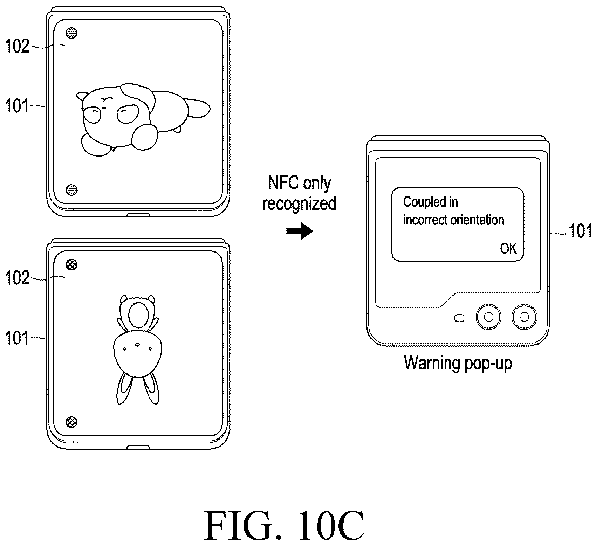

According to an embodiment, FIG. 10A illustrates a case in which a first magnetic body 276b is disposed in a designated third area (e.g., top right) of an accessory, and a second magnetic body 276c is disposed in a second area (e.g., bottom right). FIG. 10B illustrates a screen in which different types of content are displayed depending on first and second mounted orientations of an accessory having a second arrangement according to an embodiment, and FIG. 10C illustrates a screen indicating incorrect mounting of an accessory having a second arrangement according to an embodiment.

Referring to FIG. 10A to FIG. 10C, when a Hall sensor 276a detects a signal (e.g., an S-pole signal) generated by the second magnetic body 276c as one of two surfaces of an accessory 102 is mounted to an electronic device 101 while facing the electronic device 101, the electronic device 101 may output a screen to which theme A is applied, based on identification information and a mounted orientation, such as NFC and S-pole recognition. When a signal (e.g., an N-pole signal) generated by the first magnetic body 276b is detected as the other of the two surfaces of the accessory 102 is mounted to the electronic device 101 while facing the electronic device 101, the electronic device 101 may display a screen to which theme B is applied, based on NFC and N-pole recognition. On the other hand, as illustrated in FIG. 10C, when only NFC is recognized by the electronic device 101, the electronic device 101 may output information indicating that the accessory is mounted in an incorrect orientation.

Referring to FIGS. 11A to 11C, in a double-sided accessory 102 in which first content is displayed on the front surface of the accessory 102 and second content is displayed on the rear surface of the accessory 102, first poles (e.g., N poles) of multiple magnetic bodies 276b and 276c may face the front surface of the accessory 102, and second poles (e.g., S poles) of the multiple magnetic bodies 276b and 276c may face the rear surface of the accessory 102. In this way, the multiple magnetic bodies 276b and 276c may be disposed on one surface of the accessory 102 such that the magnetic bodies have the same polarity.

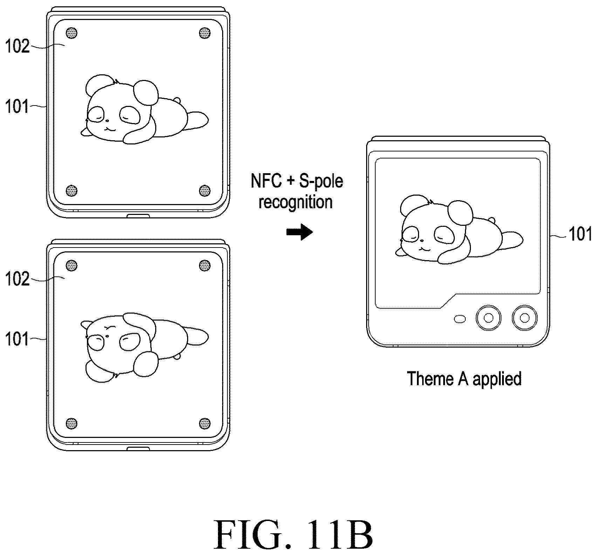

For example, referring to FIG. 11B, as one (e.g., a rear surface) of two surfaces of the accessory 102 is mounted to the electronic device 101 while facing the electronic device 101, a signal (e.g., an S-pole signal) generated by one of the multiple magnetic bodies 276b and 276c may be detected by a Hall sensor 276a. Here, because the multiple magnetic bodies 276b and 276c are arranged on one surface of the accessory 102 to output the same polarity, signals having the same polarity may be detected by the Hall sensor 276a even when the accessary is inserted right side up or upside down into a protective case of the electronic device 101. Therefore, regardless of the upright or inverted orientation, the Hall sensor 276a of the electronic device 101 may detect a magnetic force generated by any one of the multiple magnetic bodies 276b and 276c, and thus the electronic device 101 may output a screen to which theme A is applied, based on identification information and a mounted orientation, such as NFC and S-pole recognition.

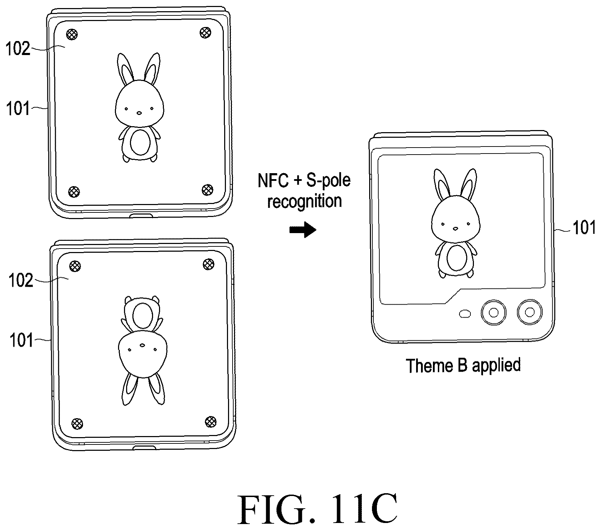

Referring to FIG. 11C, as the other (e.g., a front surface) of the two surface of the accessory 102 is mounted to the electronic device 101 while facing the electronic device 101, a signal generated by any one of the multiple magnetic bodies 276b and 276c may be detected by the Hall sensor 276a. In this case, regardless of the upright or inverted orientation, the magnetic force generated by any one of the multiple magnetic bodies 276b and 276c is detected by the Hall sensor 276a of the electronic device 101, and thus the electronic device 101 may output a screen to which theme B is applied, based on identification information and a mounted orientation, for example, NFC and N-pole recognition.

Meanwhile, although the foregoing describes an example where one Hall sensor and multiple magnetic bodies are arranged, it is also possible to identify a mounted orientation by using a single magnetic element.

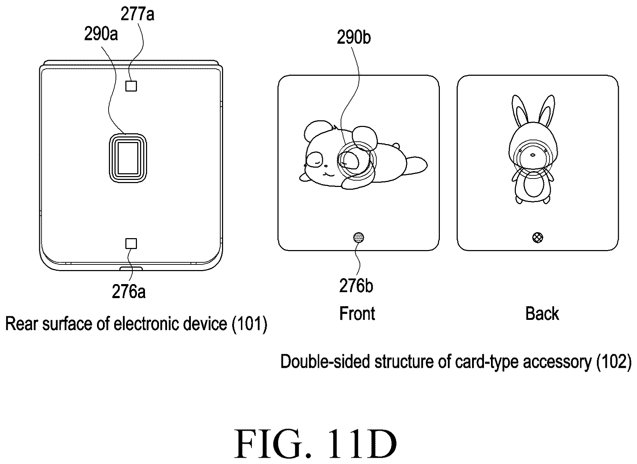

FIG. 11D illustrates a case in which one magnet is disposed according to an embodiment.

Referring to FIG. 11D, when one magnetic body 276b is disposed on an accessory 102, a Hall sensor 276a may be disposed at a location corresponding to the magnetic body 276b to identify the mounted orientation of the accessory 102. For example, the magnetic body 276b may be disposed such that one pole (e.g., the N pole) of the magnetic body 276b faces the front surface of the accessory 102, and the other pole (e.g., the S pole) of the magnetic body 276b faces the rear surface of the accessory 102. Thus, when the rear surface of the accessory 102 is mounted to face the rear surface of the electronic device 101 such that the front surface of the accessory 102 is exposed to the outside, the Hall sensor 276a may detect an S-pole signal from the magnetic body 276b. Accordingly, the electronic device 101 may identify that the accessory 102 is mounted in a front orientation. On the other hand, when the front surface of the accessory 102 is mounted to face the rear surface of the electronic device 101 such that the rear surface of the accessory 102 is exposed to the outside, the Hall sensor 276a may detect an N-pole signal from the magnetic body 276b.

As described above, when one Hall sensor 276a and one magnetic body 276b are used, the electronic device 101 may identify whether the mounted orientation of the accessory 102 is a front orientation or a rear orientation.

If a Hall sensor 277a, in addition to the Hall sensor 276a, is additionally disposed in the electronic device 101, the electronic device 101 may identify whether the mounted orientation of the accessory 102 is a front or rear orientation, as well as identify an upright or inverted orientation. For example, when the rear surface of the accessory 102 is mounted to face the rear surface of the electronic device 101 such that an image displayed on the front surface of the accessory 102 appears upside down, an S pole signal from the magnetic body 276b may be detected by the Hall sensor 277a other than the Hall sensor 276a. Thus, based on the signal detected by the other Hall sensor 277a, the electronic device 101 may identify that the accessory 102 is mounted in an inverted orientation and in an orientation in which the front surface of the accessory 102 is exposed. On the other hand, based on the signal detected by the Hall sensor 276a, the electronic device 101 may identify that the accessory 102 is mounted in an upright orientation and in an orientation in which the front surface of the accessory 102 exposed.

Conversely, when the front surface of the accessory 102 is mounted to face the rear surface of the electronic device 101 such that an image displayed on the rear surface of the accessory 102 appears upside down, the Hall sensor 277a other than the Hall sensor 276a may detect an N pole signal from the magnetic body 276b. Thus, based on the signal detected by the other Hall sensor 277a, the electronic device 101 may identify that the accessory 102 is mounted in an inverted upright orientation and in an orientation in which the rear surface of the accessory 102 is exposed. On the other hand, based on the signal detected by the Hall sensor 276a, the electronic device 101 may identify that the accessory 102 is mounted in an upright orientation and in an orientation in which the rear surface of the accessory 102 is exposed.

On the other hand, when a double-sided accessory is not identified in operation 815 in FIG. 8A, referring to FIG. 8B, the electronic device 101 may identify whether the accessary is a single-sided accessory in operation 845. In operation 850, the electronic device 101 may identify whether there is a signal sensed by the Hall sensor. When the identification information of the accessory is identified but there is no signal sensed by the Hall sensor, the electronic device 101 may, in operation 855, output information indicating incorrect mounting of the accessory, as in operation 825 described above.

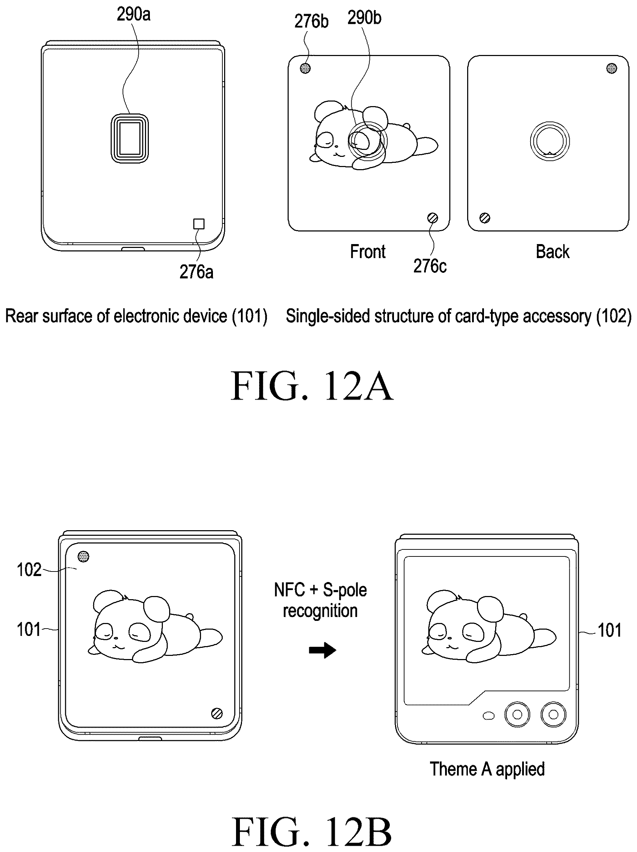

In an embodiment, in the case of a single-sided accessory, only the mounted orientation of one surface may be detected. Accordingly, in operation 860, the electronic device 101 may identify whether the sensed signal is a first magnetic body signal. Here, the first magnetic body signal may be a signal (e.g., S-pole signal or N-pole signal) indicating that the single-sided accessory is mounted to the electronic device 101 in one designated orientation. Thus, in response to the sensed signal being the first magnetic body signal, the electronic device 101 may execute the first theme via the display in operation 865. To further describe this, reference may be made to FIGS. 12A to 12D.

Conversely, a signal different from the first magnetic body signal may be detected when the sensed signal is not the first magnetic body signal, for example, when the accessary is not mounted in a designated orientation but is not incorrectly mounted. In this case, the electronic device 101 may execute a designated mode via the display in operation 870.

According to an embodiment, a signal applying unit (e.g., a magnetic body that generates a magnetic force) disposed on the one-sided accessory and the Hall sensor of the electronic device 101 may have an arrangement structure as illustrated in FIG. 12A. FIG. 12A illustrates a fourth arrangement of elements for detecting a mounted orientation between an electronic device and a one-sided accessory according to an embodiment.

According to an embodiment, FIG. 12A illustrates a case in which a first magnetic body 276b is disposed in a designated first area (e.g., top left) of the accessory and a second magnetic body 276c is disposed in a second area (e.g., bottom right) of the accessory.

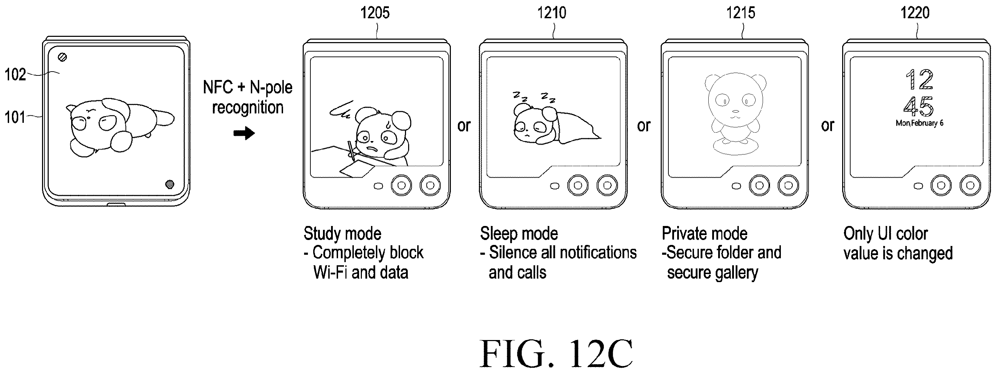

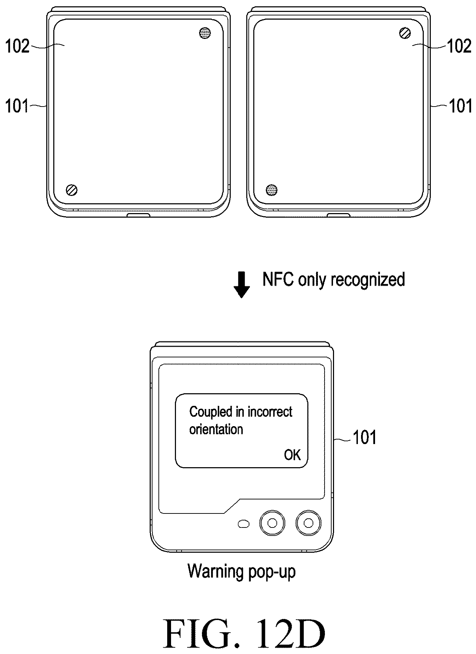

FIG. 12B illustrates a screen in which content is displayed when a first surface of an accessory having the fourth arrangement according to an embodiment is mounted in an orientation in which the first surface faces the rear surface of an electronic device. FIG. 12C illustrates a screen in which an operation mode changes when the first surface of the accessory having the fourth arrangement according to an embodiment is mounted in an orientation in which the first surface faces the rear surface of an electronic device. FIG. 12D illustrates a screen indicating incorrect mounting of the accessory having the fourth arrangement according to an embodiment.

For example, referring to FIG. 12B, when a signal (e.g., an S-pole signal) generated by a second magnetic body 276c is detected as the accessory 102 is mounted on the electronic device 101, the electronic device 101 may output a screen to which theme A is applied, based on identification information and a mounted orientation, for example, NFC and S-pole recognition. Here, the mounted orientation of the accessory 102 may be a first mounted orientation in which one of two surfaces of the accessory 102 faces the rear surface (e.g., the second surface 220a in FIG. 2B) of the electronic device 101.

On the other hand, referring to FIG. 12C, when a signal (e.g., an N-pole signal) generated by a first magnetic body 276b is detected as the accessory 102 is mounted on the electronic device 101, the electronic device 101 may recognize identification information and a mounted orientation, for example, NFC and the N pole. If a signal different from a designated signal, for example, a first magnetic body signal, is detected, the electronic device 101 may output a screen to which theme B is applied, or execute a designated mode according to a user configuration.

For example, as illustrated in FIG. 12C, in response to recognizing the NFC and the N pole, the electronic device 101 may execute one mode among a study mode 1205, a sleep mode 1210, a private mode 1215, and a mode 1220 that changes a UI color value. Here, the one mode may be executed based on configuration information in which the user has previously selected a desired mode from the multiple modes when the accessory is mounted. Furthermore, even when the accessory is mounted, the user may perform configuration such that content corresponding to the accessory, such as a theme, is not applied. In addition, in response to identifying that the mounted orientation of the accessory is not a designated orientation, the electronic device 101 may display multiple configurable modes, and may perform control to apply one mode selected from the user. For example, various motions or various types of characters may be sequentially changed and displayed as the user touches content displayed on the display, and when the user selects application, a screen to which the corresponding motion or character is applied may be displayed. On the other hand, as illustrated in FIG. 12D, when the accessory is mounted to the electronic device 101 but only NFC is recognized, the electronic device 101 may output information indicating that the accessary is mounted in an incorrect orientation.

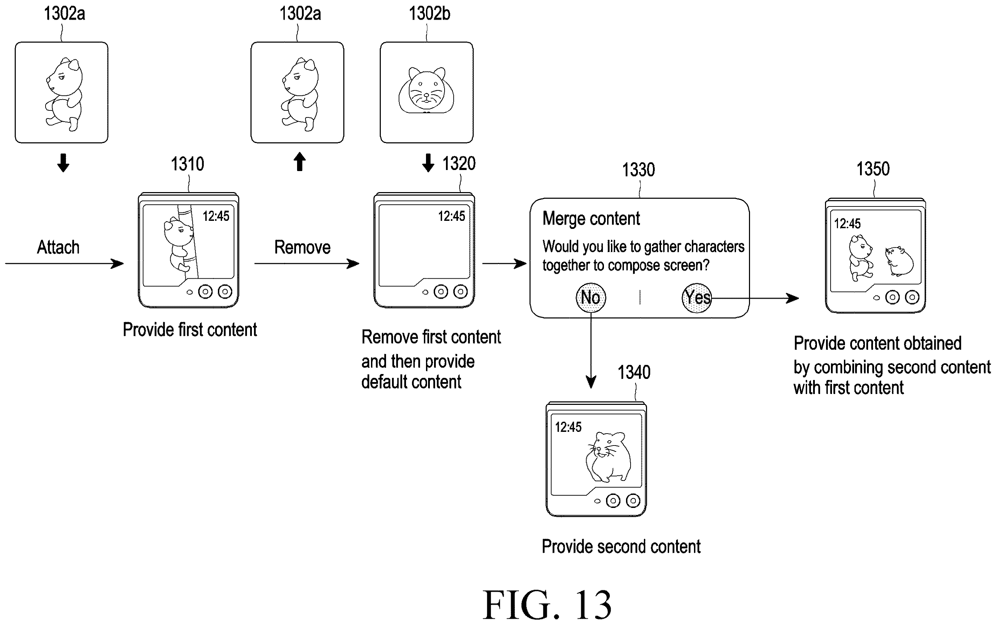

FIG. 13 illustrates a content combination using multiple accessories according to an embodiment.

Referring to FIG. 13, when a first accessory 1302a is attached (or mounted) to the electronic device 101, the electronic device 101 may provide first content associated with the first accessory 1302a, as illustrated in 1310. Here, the first content may be associated with content displayed on the first accessory 1302a. When removal (or detachment) of the first accessory 1302a is detected, the first content may be removed and default content may be provided, as illustrated in 1320. Subsequently, when a second accessory 1302b is attached, the electronic device 101 may display a pop-up window 1330 in response to detecting the attachment of the second accessory 1302b. The pop-up window 1330 may include content a message asking a user whether to reflect current content in the history of previous content. If the user does not select a combination with the previous content, second content associated with the second accessory 1302b may be provided, as illustrated in 1340. On the other hand, if the user selects a combination with the previous content, the electronic device 101 may provide content obtained by combining the second content with the first content, as illustrated in 1350.

According to an embodiment, the content combination operation may be performed by a server 108, and the server 108 may manage historical information of accessories mounted to the electronic device 101 to provide the mixed content or new content to the electronic device 101.

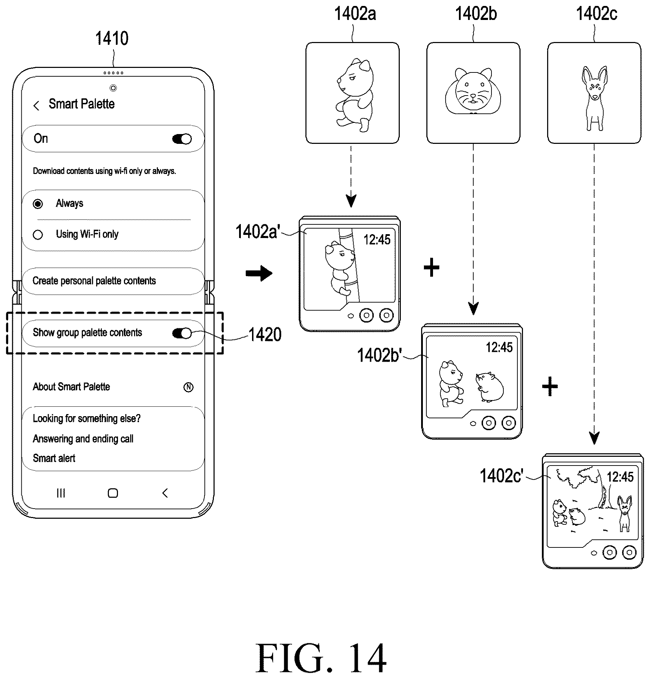

Whether to perform the content combination as described may be preconfigured according to user configuration through menus. This will be described with reference to FIG. 14. FIG. 14 illustrates a screen for configuring whether to activate a content grouping function according to an embodiment.

Referring to FIG. 14, a configuration screen 1410 may include various menus related to mounting of the accessory, among which a "show group palette contents" function 1420 may represent a function for activating or deactivating content combination. For example, when the function 1420 is configured to be "on," the electronic device 101 may output content in which a previous content and the content associated with the currently mounted accessory are combined, without displaying a pop-up window asking the user whether to perform the combination. The combined content may be generated by the electronic device 101 or the server 108, based on an image synthesis algorithm, or alternatively, the combined content may be pre-made content.

Thus, after the electronic device 101 provides first content 1402a' as a first accessory 1402a is mounted to the electronic device 101, when the second accessory 1402b is mounted, second content 1402b' according to combination may be provided, and then, when a third accessory 1402c is mounted, third content 1402c' may be provided. In this way, the electronic device 101 may identify whether each accessory belongs to one group based on identification information, and display mixed content when each accessary belongs to one group.

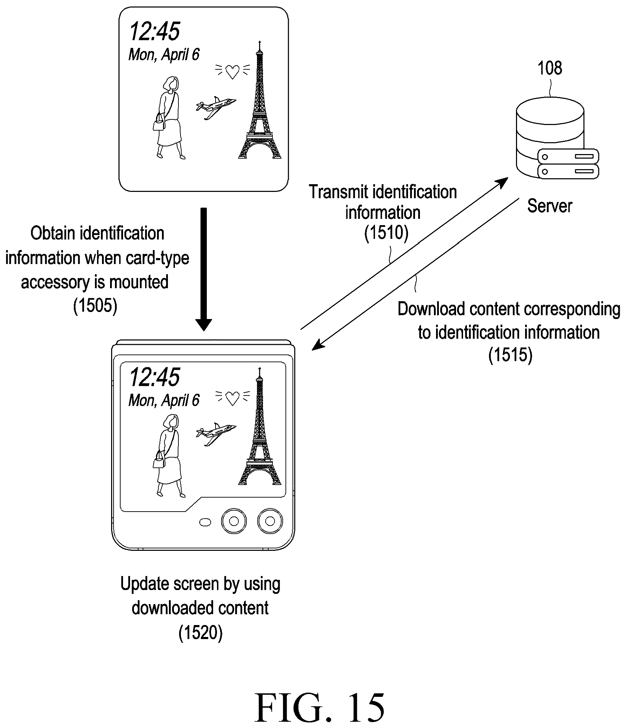

FIG. 15 illustrates a method for receiving, from a server, content corresponding to identification information of an accessory according to an embodiment.

Referring to FIG. 15, when a card-type accessory is mounted, an electronic device 101 may obtain identification information (1505), and may transmit the obtained identification information to a server 108. The electronic device 101 may download content corresponding to the identification information from the server 108 (1505), and may update a screen by using the downloaded content (1520).

According to an embodiment, the server 108 may store content that is mapped to the identification information of the accessory. For example, the server 108 may store and manage data about accessories so as to provide various types of content according to accessories.

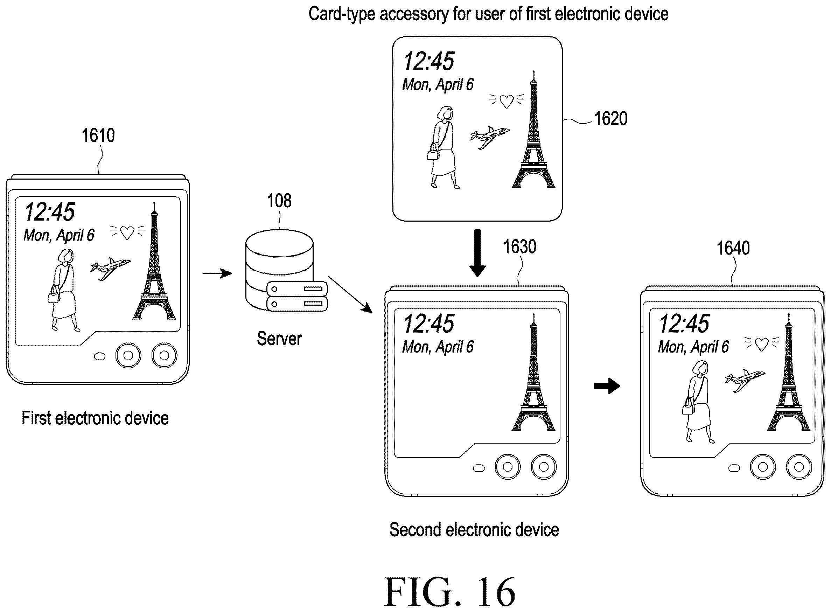

FIG. 16 illustrates a method for sharing content corresponding to identification information of an accessory with another electronic device according to an embodiment.

Referring to FIG. 16, a user may share an accessory with another user, such as a family member. When the accessory is mounted to a first electronic device, content associated with the accessory may be output via the first electronic device, as illustrated in 1610. If the user detaches the accessory 1620 from the first electronic device and then attaches the accessory 1620 to a second electronic device, the screen of the second electronic device, as illustrated in 1630, may change to content associated with the accessory, as illustrated in 1640. In an embodiment, to share the accessory between the first electronic device and the second electronic device, a user authentication process via a server 108 may be required to prevent unauthorized use of the accessory by an unauthenticated electronic device.

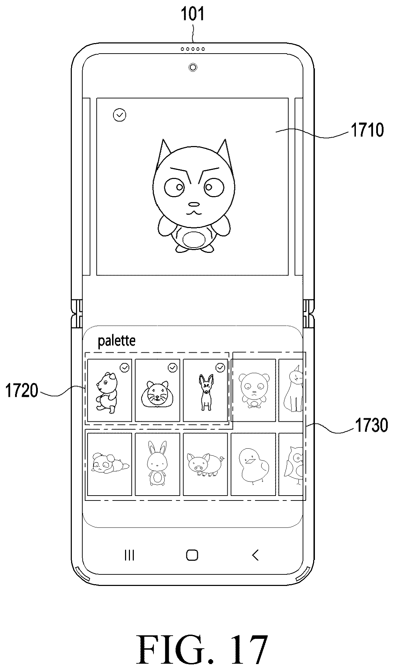

FIG. 17 illustrates a preview screen of combinable content according to an embodiment.

In FIG. 17, an electronic device 101 may display content 1710 provided by an accessory in a preview format. In this case, a user can identify information about another content that can be combined with the content 1710. For example, the electronic device 101 may display a list of multiple types of content 1720, combinable with the content 1710, and content 1730, which can be combinable in the future. For example, among N group accessory series, content 1720 associated with an accessory that has been previously mounted may be displayed in an active state, while content provided from an accessory that has not yet been mounted may be displayed in an inactive state.

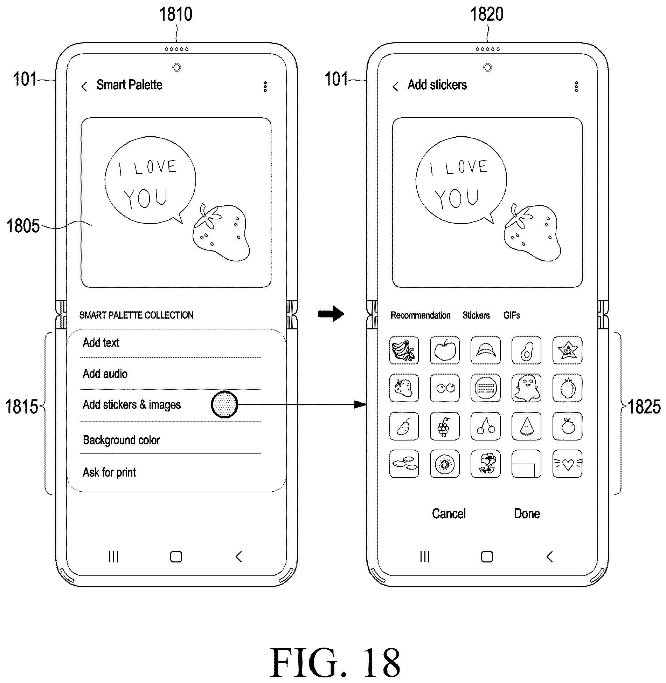

FIG. 18 illustrates screen of personalized content customization according to an embodiment.

Referring to FIG. 18, a user may customize and store an accessory's content in his/her own style. As illustrated in 1810, when content to be customized by the user is referred to as primary content, an electronic device 101 may provide multiple customization function menus 1815, and the user can use the menus 1815 to produce secondary content. The multiple customization function menus 1815 may include menus for various functions, such as a text writing function, an audio content adding function, a different sticker and animation content adding function, and a background color change function. For example, in response to the user's selection of a menu indicative of adding stickers and images from among the multiple customization function menus 1815, the electronic device 101 may display available stickers and images 1825, as illustrated in 1820. For example, the electronic device 101 may analyze the primary content to search for content of the same series or similar style, thereby providing the available stickers and images 1825 in the form of a recommendation menu.

The secondary content thus produced may be stored in the accessory via an NFC writing function. Accordingly, data regarding the secondary content may be stored in an internal storage space of the accessory, and the secondary content may be printed and displayed on the external surface of the accessory. According to an embodiment, the produced content may also be uploaded to the server and stored in the server 108.

Although the foregoing describes an example of using primary content to produce secondary content, various variations may be possible. For example, when content 1805 associated with content displayed on the accessory is referred to as primary content, the primary content may be modified by the user into secondary content, and the modified secondary content may be displayed via the display of the electronic device 101.

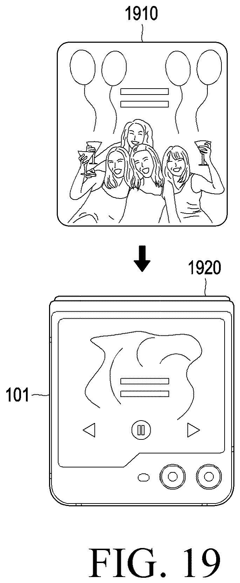

FIG. 19 illustrates an execution screen of a content-related music application when an accessory according to an embodiment is mounted.

Referring to FIG. 19, an example is illustrated in which an electronic device 101 detects that an accessory 1910 is mounted and, in response, a music application associated with content on the accessory 1910 is executed via a display of the electronic device 101, as illustrated in 1920. For example, the electronic device 101 may obtain an access code enabling access to designated content based on identification information of the accessory 1910, and may download a media file, based on the access code. The electronic device 101 may play the downloaded media file in response to a user selection.

According to an embodiment, different accessories may provide different sound source media files. For example, when a content grouping function is activated in an "on" state, the electronic device 101 may, whenever accessories are sequentially mounted, organize media files of the same group into one playlist, based on identification information of the mounted accessories. Accordingly, the electronic device 101 may provide the media files as a single music album. On the other hand, if the content grouping function is deactivated in an "off" state, the electronic device 101 may play one media file, based on the identification information of the mounted accessories.

According to an embodiment, the types of content that can be mapped to identification information of an accessory may vary. For example, the identification information of the accessory may be mapped to at least one of a cover image, a background image, a theme, a service, an application, or a file of the electronic device 101, and this mapping relationship may be stored and managed by a server 108.

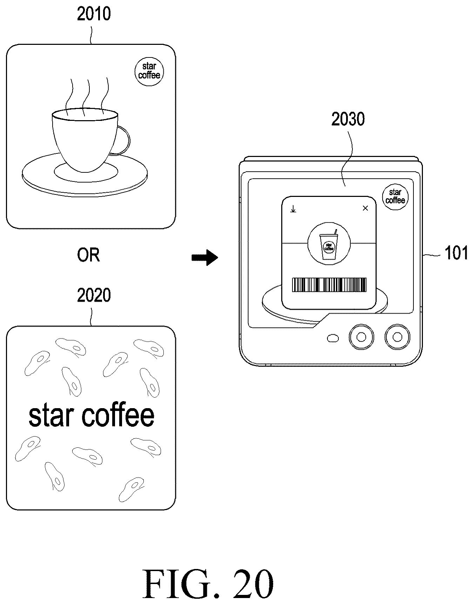

FIG. 20 illustrates an execution screen of a content-related service application when an accessory according to an embodiment is mounted.

Referring to FIG. 20, a first accessory 2010 and/or a second accessory 2020 may be used to provide an application or a service associated with the accessory 2010 or 2020. As illustrated in FIG. 20, although intended to provide the same application or service, accessories of various styles may be provided. For example, when the first accessory 2010 is mounted to an electronic device 101, the electronic device 101 may identify the first accessory 2010. In response to identifying the first accessory 2010, the electronic device 101 may download, from the first accessory 2010, source code for executing a service rather than content. In this case, the electronic device 101 may provide a location-based coupon notification service. Furthermore, the electronic device 101 may provide the notification service when entering a specific location (or space) while the first accessory 2010 is mounted. As described above, the types of content, operations, or services that can be provided by the electronic device 101 may vary depending on accessories that are mounted to the electronic device 101.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment, in a storage medium storing at least one computer-readable instruction, the at least one instruction, when executed by at least one processor 120 or 620 of an electronic device 101, may causes the electronic device to perform at least one operation, wherein the at least one operation may include obtaining identification information of an accessory 102 via a short-range communication module 190 or 690 of the electronic device. According to an embodiment, the at least one operation may include identifying an orientation in which the accessory is mounted to the electronic device, based on a signal detected by at least one sensor 176 or 676 of the electronic device as the accessory is mounted to the electronic device. According to an embodiment, the at least one operation may include outputting content corresponding to the identification information and the mounted orientation.

## Claims

1. An electronic device (101) comprising:
a display (160 or 660);
a short-range communication module (190 or 690);
at least one sensor (176 or 676);
at least one processor (120 or 620); and
memory (130 or 630) storing instructions,
wherein the instructions , when executed by the at least one processor, cause the electronic device to:
obtain identification information of an accessory (102) via the short-range communication module;
based on a signal detected by the at least one sensor as the accessory is mounted to the electronic device, identify an orientation in which the accessory is mounted to the electronic device; and
output, via the display, content corresponding to the identification information and the mounted orientation.

2. The electronic device of claim 1, wherein the instructions cause the electronic device to identify the mounted orientation, based on any one or a combination of a first orientation in which a front surface of the accessory is mounted on a rear surface of the electronic device, a second orientation in which a rear surface of the accessory is mounted on the rear surface of the electronic device, a third orientation in which the accessory is mounted to the electronic device in an upright state, or a fourth orientation in which the accessory is mounted to the electronic device in an inverted state.

3. The electronic device of claim 1 or 2, wherein the instructions cause the electronic device to:
output first content associated with the rear surface of the accessory when the mounted orientation is the first orientation; and
output second content associated with the front surface of the accessory when the mounted orientation is the second orientation.

4. The electronic device of any one of claims 1 to 3, wherein the instructions cause the electronic device to:
identify whether the mounted orientation of the accessory is an upright orientation in which the accessory is mounted to the electronic device in the upright state or an inverted orientation in which the accessory is mounted to the electronic device in the inverted state;
output third content associated with the accessory when the mounted orientation is the upright orientation; and
when the mounted orientation is the inverted orientation, output fourth content different from the third content or operate in a designated mode.

5. The electronic device of any one of claims 1 to 4, wherein the instructions cause the electronic device to obtain the identification information of the accessory and, when that there is no signal detected by the at least one sensor, output, via the display, information indicating that the accessory is mounted incorrectly.

6. The electronic device of any one of claims 1 to 5, wherein the instructions cause the electronic device to obtain the identification information of the accessory from an NFC tag included in the accessory via a near-field communication (NFC) reader included in the short-range communication module.

7. The electronic device of any one of claims 1 to 6, wherein the at least one sensor comprises a Hall sensor, and a signal applying unit disposed on the accessory comprises a magnetic body configured to generate a magnetic force, and
wherein the instructions cause the electronic device to identify the orientation in which the accessory is mounted, by identifying, via the at least one sensor, a polarity of the signal applying unit disposed on the accessory.

8. The electronic device of any one of claims 1 to 7, wherein the instructions cause the electronic device to:
as the accessory is mounted on the electronic device, transmit the obtained identification information to a server when the identification information of the accessory is obtained,
obtain, from the server, content based on the identification information of the accessory and mounted history information of at least one other accessory, and
output the obtained content.

9. The electronic device of any one of claims 1 to 8, wherein the accessory is mounted to the electronic device by being inserted into an empty space between the electronic device and a transparent protective case configured to cover a portion of the rear surface of the electronic device, or is mounted to the electronic device by being inserted into an accommodation structure of the transparent protective case.

10. A method for performing an operation according to mounting of an accessory in an electronic device (101), the method comprising:
obtaining identification information of an accessory (102) via a short-range communication module (190 or 690) of the electronic device;
based on a signal detected by at least one sensor (176 or 676) of the electronic device as the accessory is mounted to the electronic device, identifying an orientation in which the accessory is mounted to the electronic device, and
outputting content corresponding to the identification information and the mounted orientation.

11. The method of claim 10, wherein the identifying of the orientation in which the accessory is mounted to the electronic device comprises identifying the mounted orientation, based on any one or a combination of a first orientation in which a front surface of the accessory is mounted on a rear surface of the electronic device, a second orientation in which a rear surface of the accessory is mounted on the rear surface of the electronic device, a third orientation in which the accessory is mounted to the electronic device in an upright state, or a fourth orientation in which the accessory is mounted to the electronic device in an inverted state.

12. The method of claim 10 or 11, wherein the outputting of the content corresponding to the identification information and the mounted orientation comprises outputting first content associated with the rear surface of the accessory and the identification information of the accessary when the mounted orientation is the first orientation.

13. The method of any one of claims 10 to 12, wherein the outputting of the content corresponding to the identification information and the mounted orientation comprises:
identifying whether the mounted orientation of the accessory is an upright orientation in which the accessory is mounted to the electronic device in the upright state or an inverted orientation in which the accessory is mounted to the electronic device in the inverted state;
outputting third content associated with the accessory when the mounted orientation is the upright orientation; and
when the mounted orientation is the inverted orientation, outputting fourth content different from the third content or operating in a designated mode.

14. The method of any one of claims 10 to 13, further comprising
obtaining the identification information of the accessory and, when there is no signal detected by the at least one sensor, outputting, via a display of the electronic device, information indicating that the accessory is mounted incorrectly.

15. A storage medium storing at least one computer-readable instruction, wherein the at least one instruction, when executed by at least one processor (120 or 620) of an electronic device (101), causes the electronic device to perform at least one operation, wherein the at least one operation comprises:
obtaining identification information of an accessory (102) via a short-range communication module (190 or 690) of the electronic device;
based on a signal detected by at least one sensor (176 or 676) of the electronic device as the accessory is mounted to the electronic device, identifying an orientation in which the accessory is mounted to the electronic device; and
outputting content corresponding to the identification information and the mounted orientation.
